# EUROPEAN PATENT APPLICATION

(11) **EP 4 794 250 A1**
(43) Date of publication of application: **19.08.2026**
(21) Application number: 26157764.7
(22) Date of filing: 11.02.2026
(51) Int. Cl.: H04L 9/00

(54) **QUANDLE-BASED SYSTEM FOR IMPLEMENTING SECURE COMMUNICATION**

(30) Priority: 12.02.2025 IL 31897825; 26.08.2025 US 202519309974
(71) Applicant: Mellanox Technologies, Ltd., 2069200 Yokneam (IL); Bar-Ilan University, 5290002 Ramat Gan (IL)
(72) Inventor: MENTOVICH, Elad, 2069200 Yokneam (IL); ZAHAVI, Eitan, 2069200 Yokneam (IL); HASSON RUSO, Ran, 2069200 Yokneam (IL); COHEN, Eliahu, 5290002 Ramat Gan (IL); CARMI, Avishy, 2069200 Yokneam (IL)
(74) Representative: Mathys & Squire

(57) **Abstract**

Systems and methods are described for secure communication to facilitate encrypted transmission of data between a transmitting device (encoder) and a receiving device (decoder), leveraging quandle algebra. An example system includes an encoder, a decoder, and a communication channel. The encoder may generate a ciphertext based on a message, encoding variable(s), and public encryption key(s). The cipher text is then transmitted, via the communication channel, to the decoder. The decoder may receive the ciphertext via the communication channel and generate a deciphered form of the message based on the ciphertext, the encoding variable(s), and private encryption key(s). The encryption and decryption are performed using binary operations that satisfy axioms of a quandle and/or a rack.

## Description

### TECHNOLOGICAL FIELD

Example embodiments of the present invention relate to a secure encryption-decryption technique.

### BACKGROUND

The foundation of modern cryptographic security relies heavily on public key protocols, such as RSA (Rivest-Shamir-Adleman), DH (Diffie-Hellman), and ECDH (Elliptic Curve Diffie-Hellman). These protocols are predicated on the computational difficulty of solving certain mathematical problems: factorization for RSA, the discrete logarithm problem for DH, and the elliptic-curve discrete logarithm problem for ECDH. However, the advent of large-scale quantum computing poses a significant threat to these cryptographic foundations. Quantum algorithms, notably Shor's algorithm, have demonstrated the potential to efficiently solve these underlying mathematical challenges, rendering these encryption methods vulnerable to quantum attacks.

Applicant has identified a number of deficiencies and problems associated with conventional encryption techniques. Many of these identified problems have been mitigated by developing solutions that are included in embodiments of the present disclosure, many examples of which are described in detail herein.

### BRIEF SUMMARY

The invention is defined by the claims. In order to illustrate the invention, aspects and embodiments which may or may not fall within the scope of the claims are described herein.

In one aspect, a system for implementing secure communication is presented. The system comprising: an encoder, wherein the encoder is configured to: receive a message *(x),* a plurality of encoding variables (*y*₁*, y*₂*, ... , yₙ*)*,* and a public encryption key *(e);* generate a ciphertext *(c)* based on the message *(x),* the plurality of encoding variables (*y*₁*, y*₂*, ... , yₙ*)*,* and the public encryption key *(e),* wherein *c* = (... ((*x* ▷ *y*₁) ▷ *y*₂) ... ) ▷ *yₙ*; and transmit the ciphertext *(c)* on a communication channel, wherein the communication channel is operatively coupled to the encoder; and a decoder operatively coupled to the communication channel, wherein the decoder is configured to: receive the ciphertext (c), the plurality of encoding variables (*y*₁*, y*₂*, ... , yₙ*), and a private encryption key (f); and generate a deciphered form *(x')* of the message *(x)* based on the ciphertext (c), the plurality of encoding variables *(y*₁*, y*₂*,* ..., *yₙ*)*,* and the private encryption key *(f),* wherein *x'* = (... *((c* ◁ *yₙ*) ◁ *y*_{*n-*1}) ... ) ◁ *y*₁ , and wherein ▷ and ◁ are binary operations that satisfy axioms of a quandle.

In some embodiments, x and *yᵢ* are rational numbers, and wherein *yᵢ* is not equal to 1.

In some embodiments, x is a non-integer.

In some embodiments, 0 ≤ *x* ≤ *n* - 1, wherein *n* is a composite number of the form, *n = p · q,* and wherein *p* and *q* are prime numbers.

In some embodiments, for each encoding variable ${y}_{i} , x ⊳ {y}_{i} = {y}_{i} {\left(\frac{x}{{y}_{i}}\right)}_{i}^{e}$, wherein 1 < *e* < *ϕ*(*n*)*,* wherein *ϕ*(*n*) is Euler's totient function, and wherein *ϕ*(*n*) = *ϕ*(*p · q*) = *(p -* 1) · *(q* - 1).

In some embodiments, 1 *< e < λ*(*n*)*,* wherein *λ*(*n*) is Carmichael's totient function, and wherein *λ*(*n*) = *λ*(*p* · *q*) = *lcm(p* - 1*, q* - 1), wherein lcm is least common multiple.

In some embodiments, e is coprime to *ϕ*(*n*).

In some embodiments, for each encoding variable ${y}_{i} , c ⊲ {y}_{i} = {y}_{i} ⋅ {\left(\frac{c}{{y}_{i}}\right)}_{i}^{f}$, and wherein *e · f =* 1 *mod ϕ*(*n*)*.*

In some embodiments, the plurality of encoding variables *(y*₁*, y*₂*,* ... , *yₙ*) comprise a plurality of segmented message portions (*x*₁*, x*₂*,* ... , *xₙ*) from the message *(x),* wherein the encoder is further configured to: generate a ciphertext (c) based on the plurality of segmented message portions (*x*₁*, x*₂*,* ..., *xₙ*)*,* and the public encryption key (e), wherein c = (... *((x* ▷ *x*₁) ▷ *x*₂) ... ) ▷ *xₙ.*

In some embodiments, the decoder is further configured to: generate a deciphered form *(x')* of the message *(x)* based on the ciphertext (c), the plurality of segmented message portions (*x*₁*, x*₂*,* ..., *xₙ*)*,* and the private encryption key *(f),* wherein *x'* = (... ((c ◁ *xₙ*) ◁ *x*_{*n-*1}) ... ) ◁ *x*₁.

In another aspect, a system for encoding a message is presented. The system comprising: an encoder; and a communication channel operatively coupled to the encoder, wherein the encoder is configured to: receive a message (x), a plurality of encoding variables (*y*₁*, y*₂*,* ... , *yₙ*)*,* and a public encryption key (e); generate a ciphertext (c) based on the message *(x),* the plurality of encoding variables (*y*₁*, y*₂*, ..., yₙ*)*,* and the public encryption key *(e),* wherein *c* = (... ((x ▷ *y*₁) ▷ *y*₂) ... ) ▷ *yₙ*, wherein ▷ is a binary operation that satisfies an axiom of a quandle; and transmit the ciphertext *(c)* on the communication channel.

In yet another aspect, a method for encoding a message is presented. The method comprising: receiving a message *(x),* a plurality of encoding variables (*y*₁*, y*₂*, ..., yₙ*)*,* and a public encryption key *(e);* generating a ciphertext *(c)* based on the message *(x),* the plurality of encoding variables (*y*₁*, y*₂*, ... , yₙ*), and the public encryption key *(e),* wherein *c* = (... *((x* ▷ *y*₁) ▷ *y*₂) ... ) ▷ *yₙ*, wherein ▷ is a binary operation that satisfies an axiom of a quandle; and transmitting, using the encoder, the ciphertext *(c)* to a communication channel.

In yet another aspect, a system for decoding a message is presented. The system comprising: a decoder; and a communication channel operatively coupled to the decoder, wherein the decoder is configured to: receive, via the communication channel, a ciphertext *(c),* a plurality of encoding variables (*y*₁*, y*₂*, ... , yₙ*)*,* and a private encryption key *(f);* and generate a deciphered form *(x')* of a message *(x)* based on the ciphertext *(c),* the plurality of encoding variables (*y*₁*, y*₂*,* ... , *yₙ*), and the private encryption key *(f),* wherein *x*' = *(... ((c* ◁ *yₙ*) ◁ *y*_{*n-*1}) ...) ◁ *y*₁ , and wherein ◁ is a binary operation that satisfies an axiom of a quandle.

In yet another aspect, a method for decoding a message is presented. The method comprising: receiving, using a decoder, a ciphertext *(c),* a plurality of encoding variables (*y*₁*, y*₂*, ... , yₙ*)*,* and a private encryption key *(f);* and generating, via the decoder, a deciphered form *(x')* of the message *(x)* based on the ciphertext *(c),* the plurality of encoding variables (*y*₁*, y*₂*,* ... , *yₙ*), and the private encryption key *(f),* wherein *x'* = (... *((c* ◁ *yₙ*) ◁ *y*_{*n-*1}) ... ) ◁ *y*₁*,* and wherein ◁ is a binary operation that satisfies an axiom of a quandle.

In yet another aspect, a system for implementing secure communication is presented. The system comprising: an encoder, wherein the encoder is configured to: receive a message *(x),* a plurality of encoding variables (*y*₁*, y*₂, ..., *yₙ*)*,* and a plurality of public encryption keys (*e*₁*,* e₂, *... , eₙ*)*;* generate a ciphertext *(c)* based on the message *(x),* the plurality of encoding variables (*y*₁*, y*₂, ... , *yₙ*)*,* and the plurality of public encryption keys (*e*₁*, e*₂, ..., *eₙ*)*,* wherein at each step, *c* = *x ▷ ⁱ yᵢ* ; and transmit the ciphertext *(c)* on a communication channel, wherein the communication channel operatively coupled to the encoder; and a decoder operatively coupled to the communication channel, wherein the decoder is configured to: receive the ciphertext *(c),* the plurality of encoding variables (*y*₁*, y₂, ..., yₙ*)*,* and a plurality of private encryption keys (*f₁, f₂, ... , fₙ*); and generate a deciphered form *(x')* of the message *(x)* based on the ciphertext *(c),* the plurality of encoding variables *(y*₁*, y*₂*, ... , yₙ*)*,* and the plurality of private encryption keys (*f*₁*, f*₂*, ... , fₙ*)*,* wherein at each step, *x' = c* ◁ *ⁱ yᵢ,* and wherein ▷ and ◁ are binary operations that satisfy an axiom of a quandle.

In some embodiments, 0 ≤ *x* ≤ *n* - 1, wherein *n* is a composite number of the form, *n = p · q,* and wherein *p* and *q* are prime numbers.

In some embodiments, $x {⊳}^{i} {y}_{i} = {y}_{i} ⋅ {\left(\frac{x {⊳}^{\left(i-1\right)} {y}_{i}}{{y}_{i}}\right)}^{{e}_{i}}$, wherein 1 < *eᵢ* < *ϕ*(*n*), wherein *ϕ*(*n*) is Euler's totient function, and wherein *ϕ*(*n*) = *ϕ*(*p · q)* = *(p -* 1) *· (q -* 1).

In some embodiments, $c {⊲}^{i} {y}_{i} = {y}_{i} ⋅ {\left(\frac{c {⊲}^{\left(i-1\right)} {y}_{i}}{{y}_{i}}\right)}^{{f}_{i}}$, wherein *fᵢ* corresponds to the private key for the *i^{th}* step, and wherein *eᵢ* · *fᵢ* = 1 *mod ϕ*(*n*)*.*

In yet another aspect, a system for encoding a message is presented. The system comprising: an encoder; and a communication channel operatively coupled to the encoder, wherein the encoder is configured to: receive a message *(x),* a plurality of encoding variables (*y*₁*, y*₂*, ... , yₙ*), and a plurality of public encryption keys (*e*₁*, e*₂, ..., *eₙ*); generate a ciphertext *(c)* based on the message *(x),* the plurality of encoding variables *(y*₁*, y*₂*,* ..., *yₙ*)*,* and the plurality of public encryption keys (*e*₁*,* e₂, *..., eₙ*)*,* wherein at each step, c *= x* ▷ *ⁱ yᵢ* , and wherein ▷ is a binary operation that satisfies an axiom of a quandle; and transmit the ciphertext (c) on the communication channel.

In yet another aspect, a method for encoding a message is presented. The method comprising: receiving a message *(x),* a plurality of encoding variables (*y*₁*, y₂, ... , yₙ*), and a plurality of public encryption keys (*e*₁*, e*₂, *..., eₙ*); generating a ciphertext (c) based on the message *(x),* the plurality of encoding variables *(y*₁*, y*₂, ..., *yₙ*)*,* and the plurality of public encryption keys (*e*₁*, e*₂, *..., eₙ*)*,* wherein c *= x* ▷ *ⁱ yᵢ* at each step, and wherein ▷ is a binary operation that satisfies an axiom of a quandle; and transmitting, using the encoder, the ciphertext (c) to a communication channel.

In yet another aspect, a system for decoding a message is presented. The system comprising: a decoder; and a communication channel operatively coupled to the decoder, wherein the decoder is configured to: receive a ciphertext *(c),* a plurality of encoding variables (*y*₁*, y*₂*, ... , yₙ*)*,* and a plurality of private encryption keys *(f*₁*, f*₂*, ... , fₙ*); and generate a deciphered form *(x')* of a message *(x)* based on the ciphertext *(c),* the plurality of encoding variables (*y*₁*, y*₂*,* ... , *yₙ*)*,* and the plurality of private encryption keys *(f*₁*, f₂, ... , fₙ*)*,* wherein at each step, *x'* = *c ◁ ⁱ yᵢ*, and wherein ◁ is a binary operation that satisfies an axiom of a quandle.

In yet another aspect, a method for decoding a message is presented. The method comprising: receiving, using a decoder, a ciphertext *(c),* a plurality of encoding variables (*y*₁*, y*₂*, ... , yₙ*)*,* and a plurality of private encryption keys (*f*₁*, f*₂, *..., fₙ*); and generating, via the decoder, a deciphered form *(x')* of the message *(x)* based on the ciphertext (c), the plurality of encoding variables (*y*₁*, y*₂*, ... , yₙ*), and the plurality of private encryption keys (*f*₁*, f*₂, ... , *fₙ*)*,* wherein *x' = c ◁ ⁱ yᵢ* at each step, and wherein ◁ is a binary operation that satisfies an axiom of a quandle.

Systems and methods are described for secure communication to facilitate encrypted transmission of data between a transmitting device (encoder) and a receiving device (decoder), leveraging quandle algebra. An example system includes an encoder, a decoder, and a communication channel. The encoder may generate a ciphertext based on a message, encoding variable(s), and public encryption key(s). The cipher text is then transmitted, via the communication channel, to the decoder. The decoder may receive the ciphertext via the communication channel and generate a deciphered form of the message based on the ciphertext, the encoding variable(s), and private encryption key(s). The encryption and decryption are performed using binary operations that satisfy axioms of a quandle and/or a rack.

Any feature of one aspect or embodiment may be applied to other aspects or embodiments, in any appropriate combination. In particular, any feature of a method aspect or embodiment may be applied to an apparatus aspect or embodiment, and vice versa.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the disclosure in any way. It will be appreciated that the scope of the present disclosure encompasses many potential embodiments in addition to those here summarized, some of which will be further described below.

### BRIEF DESCRIPTION OF THE DRAWINGS

Having described certain example embodiments of the present disclosure in general terms above, reference will now be made to the accompanying drawings. The components illustrated in the figures may or may not be present in certain embodiments described herein. Some embodiments may include fewer (or more) components than those shown in the figures.
FIG. 1 illustrates a schematic diagram of an example datacenter 100, in accordance with an embodiment of the disclosure;
FIG. 2 illustrates an example system environment for secure communication, in accordance with an embodiment of the present invention;
FIG. 3 illustrates a schematic block diagram of example device circuitry, in accordance with an embodiment of the present invention;
FIG. 4 illustrates an example method for encrypting a message using a public encryption key and a plurality of encoding variables, in accordance with an embodiment of the invention;
FIG. 5 illustrates an example method for decrypting an encrypted message using a private encryption key and the plurality of encoding variables, in accordance with an embodiment of the invention;
FIG. 6 illustrates an example method for encrypting a message using a plurality of public encryption keys and a plurality of encoding variables, in accordance with an embodiment of the invention; and
FIG. 7 illustrates an example method for decrypting an encrypted message using a plurality of private encryption keys and the plurality of encoding variables, in accordance with an embodiment of the invention.

### DETAILED DESCRIPTION

### Overview

Knot theory, a branch of topology, focuses on the study of knots and their properties, specifically how knots can be distinguished, categorized, and transformed into one another through continuous deformations without cutting or joining ends. This theoretical framework may be used to provide a concrete mathematical basis for developing cryptographic methods that are inherently resistant to known quantum computing threats. The application of knot theory to cryptography leverages the concept that knots and their transformations can represent data, encryption processes, and cryptographic keys. The invariants in knot theory (such as the Jones polynomial), which are properties that remain unchanged under knot deformation, offer a way to encode and secure information. These invariants can serve as the basis for cryptographic algorithms, where the complexity and difficulty of analyzing knot transformations provide security against unauthorized decryption. A tightly connected concept is that of a braid, which consists of a set of strands that may intertwine with each other vertically but do not intersect or overlap when viewed from above. Any knot can be represented as a closed braid, where the closure involves connecting the corresponding upper and lower ends of a braid without introducing new crossings. This operation transforms an open braid into a closed loop, or knot, preserving the topological features encoded in the braid structure.

The principle that two knots are equivalent if one can be transformed into the other through continuous deformation without cutting or stitching supports the security model of this cryptographic approach and can aid in traversing a noisy communication channel without losing the encoded information. In this context, the process of encryption can be conceptualized as the "knotting" of data, where the data is entangled in a complex knot structure. Decryption, conversely, involves "unknotting" the data, a process that requires knowledge of specific transformations, analogous to possessing the cryptographic key. The challenge of determining whether two knots are equivalent, particularly as knots increase in complexity, illustrates the difficulty of breaking the cryptographic scheme without the correct key. This highly complex task provides a significant barrier to both classical and quantum computational attacks.

The Reidmeister moves form the basis for determining when two knot diagrams represent the same knot, or in other words, when two knots are equivalent. The Type I move (twist and untwist) adds or removes a twist in the knot diagram. It involves creating or eliminating a single loop, effectively changing the local twisting of the strand. Despite its simplicity, the Type I move is powerful in demonstrating how a single twist does not change the essential properties of a knot. The Type II move (poke) involves two strands of the knot passing twice over or under each other. It can either introduce or remove a pair of crossings such that the strands remain unbroken and the overall topology of the knot is preserved. This move is particularly useful in illustrating how the interaction between different parts of the knot can be altered without affecting its fundamental characteristics. The Type III move (slide) involves sliding one strand over a crossing of two other strands. The Type III move does not change the number of crossings but alters the position of the strands around the crossings. The Type III move demonstrates the flexibility of knots in three-dimensional space, showing that the global structure of a knot can be preserved even as parts of it are rearranged. In the context of cryptography, the idea of knot equivalence through Reidemeister moves offers a metaphor for the encryption and decryption process. Just as a knot can be transformed through a series of moves without altering its essential characteristics, data can be encrypted into a complex form and later decrypted back to its original state, provided the correct sequence of transformations (analogous to the cryptographic key) is known.

Quandles are sets with binary operations satisfying axioms analogous to the Reidemeister moves used to manipulate knot diagrams. Embodiments of the invention contemplate an encryption framework employing the algebraic structure of quandles or racks to ensure secure, reversible encryption processes that allow for complex data manipulations while maintaining the integrity of the encrypted message. The axioms of quandles and racks facilitate the framework for encryption that mirrors operations on a message (plaintext) in the encrypted domain. Specifically, idempotency (quandle-specific) ensures that the encryption of a message using the same message as the encoding variable results in the message itself, a property that can be leveraged for consistency checks and to maintain structural patterns in encrypted data; invertibility allows for the reversible encryption process, ensuring that encrypted data (ciphertext) can be decrypted back to its original form (message) without loss of information, which is fundamental to any encryption scheme; self-distributivity enables complex manipulations of encrypted data that parallel operations on a message, allowing for certain computations to be performed directly on ciphertexts without revealing their contents. Self-distributivity allows for operations such as partially homomorphic encryption, where it is desirable to perform algebraic operations on encrypted data.

By exploiting quandle and rack axioms, the systems, methods, and computer program products described herein facilitate operations on ciphertexts similar to those performed on messages, without compromising confidentiality. Unlike conventional cryptographic algorithms that rely on associative operations (e.g., group operations), the non-associative nature of quandle operations adds a level of complexity to the cryptographic process. This way, the novel cryptographic framework proposed herein increases the level of security provided against conventional and sophisticated attacks, enabling secure data processing and transmission in digital environments. In the examples described herein, ▷ and ◁ are binary operations. Indeed, the two operations may be implemented in a number of ways, as long as these implementations satisfy the axioms of quandle and/or rack algebra.

By exploiting quandle and rack axioms, the systems, methods, and computer program products described herein facilitate operations on ciphertexts similar to those performed on messages, without compromising confidentiality. Unlike conventional cryptographic algorithms that rely on associative operations (e.g., group operations), the non-associative nature of quandle operations adds a level of complexity to the cryptographic process. This way, the novel cryptographic framework proposed herein increases the level of security provided against conventional and sophisticated attacks, enabling secure data processing and transmission in digital environments. In the examples described herein, x ▷ y and c ◁ y are binary operations. Indeed, the two operations may be implemented in a number of ways, as long as these implementations satisfy the axioms of quandle and/or rack algebra. In one example embodiment, $x ⊳ y = y {\left(\frac{x}{y}\right)}^{e}$ and $c ⊲ y = y {\left(\frac{c}{y}\right)}^{f}$, where *x* may refer to the message to be transmitted, *y* may be an encoding variable (public or private, depending on the application), e may refer to public encryption key, c may refer to the ciphertext, and *f* may refer to the private encryption key. Unlike many other cryptographic frameworks, x, y, and c are rational numbers, rather than just integers. In the proposed encryption framework, the selection of variables, such as e and *f*, may draw parallels to the established methodologies employed in the Rivest-Shamir-Adleman (RSA) algorithm, particularly in the choice and mathematical properties of specific parameters. Specifically, e may be chosen such that 1 < *e* < *ϕ*(*n*) and e is coprime to *ϕ*(*n*), meaning that e and *ϕ*(*n*) share no common divisors other than 1. This ensures that e has a multiplicative inverse modulo *ϕ*(n). *f* may be calculated as the multiplicative inverse of e modulo *ϕ*(n). This means *f* is the number that satisfies the equation e *· f =* 1 *mod ϕ*(n). In other words, *f* is chosen such that the product of *f* and e, divided by *ϕ*(*n*)*,* leaves a remainder of 1. Here, *n* is the product of two (often large) prime numbers *p* and *q*, and *ϕ*(*n*) is Euler's totient function defined as *ϕ*(*n*) = *ϕ*(*p · q*) = *(p -* 1) *· (q -* 1). Similar to the RSA algorithm, Carmichael's totient function may be used instead of Euler's totient function for same or similar purposes.

Furthermore, *x* ▷ y and *c* ◁ *y* may be complementary (in accordance with the above invertibility property), ensuring a symmetrical relationship that supports their cryptographic utility. Specifically, while *x* ▷ y is used to encrypt the message *(x),* i.e., to generate the ciphertext (c), while c ◁ *y* is used in decryption to retrieve the message *(x)* from the ciphertext (c). In conventional cryptographic algorithms, such as RSA, the message (x), is an integer. However, the proposed relationship between *x* ▷ *y* and c ◁ *y* allows *x* and *y* to also be non-integer, or rational number, which increases the complexity of the encryption. Compared to RSA, the proposed relationship not only allows the message *(x),* to be a rational number, but also includes an encoding variable *(y),* which is non-existent in RSA and can also be any integer or rational number. This further increases the complexity of the encryption, thus strengthening security by making unauthorized decryption significantly more difficult. Indeed, when *x* is an integer and *y* = 1, the resulting relationship aligns with the RSA algorithm, representing a specific instance of the proposed cryptographic framework.

Embodiments of the disclosure further extend the complexity and flexibility of the framework by incorporating additional encoding variables (including segments of the plaintext itself). The inclusion of additional encoding variables allows the encryption process to operate in multiple layers, requiring a sequential, properly ordered decryption process for recovery of the original message. The set of encoding variables (*y*₁*, y*₂*, ..., yₙ*) can originate from a single variable (e.g., *y)* that is segmented into multiple components, distributing encryption complexity across several variables for enhanced security. Alternatively, the set of encoding variables *(y*₁*, y*₂*, ... , yₙ*) can be combined into a composite variable *(y),* which may then be broken into smaller components to enable more flexible and sophisticated encryption mechanisms. For instance, such a framework for secure communication may involve encrypting a message *(x)* into a ciphertext *(c)* using a set of encoding variables (*y*₁*, y*₂*,* ... , *yₙ*) and a public encryption key *(e),* and subsequently decoding the ciphertext (c) to generate a deciphered form *(x')* of the message *(x)* using the set of encoding variables (*y*₁*, y₂, ... , yₙ*) a private encryption key (f). In particular, the encryption process may be represented as c = (... *((x* ▷ *y*₁) ▷ *y*₂) ...) ▷ *yₙ*, wherein for each encoding variable ${y}_{i} , x ⊳ {y}_{i} = {y}_{i} {\left(\frac{x}{{y}_{i}}\right)}^{e}$ . The decryption process may be represented as *x'* = (... *((c* ◁ *yₙ*) ◁ *y*_{*n-*1}) ... ) ◁ *y*₁*,* wherein for each encoding variable ${y}_{i} , c ⊲ {y}_{i} = {y}_{i} ⋅ {\left(\frac{c}{{y}_{i}}\right)}^{f}$. Here, (... ((*x* ▷ *y*₁) ▷ *y*₂) ... ) ▷ *yₙ* and ( *...* ((*c* ◁ *yₙ*) ◁ *y*_{*n-*1}) ...) ◁ *y*₁ may be complementary (in accordance with the above invertibility property).

Furthermore, embodiments of the disclosure further extend the complexity and flexibility of the framework by incorporating multiple public-private key pairs. The multiple public-private key pairs may be incorporated independently or in conjunction with multiple encoding variables. In instances where the public-private key pairs are incorporated independently, the framework for secure communication may involve encrypting a message *(x)* into a ciphertext *(c)* using an encoding variables *(y)* and a plurality of public encryption keys (*e*₁*,* e₂, *... , eₙ*)*,* and subsequently decoding the ciphertext *(c)* to generate a deciphered form (*x'*) of the message *(x)* using the encoding variable *(y),* and a plurality of private encryption keys (*f*₁*, f₂,* ... , *fₙ*)*,* each of which is the modular inverse of the corresponding *eᵢ*. In particular, the encryption process may be represented as, at each step, *c = x ▷ ⁱ y*, wherein $x {⊳}^{i} y = y ⋅ {\left(\frac{x {⊳}^{\left(i-1\right)} y}{y}\right)}^{{e}_{i}}$ . The decryption process may be represented as, at each step, *x' = c* ◁ *ⁱ y,* wherein $c {⊲}^{i} y = y ⋅ {\left(\frac{c {⊲}^{\left(i-1\right)} y}{y}\right)}^{{f}_{i}}$. Here, at each step, *x* ▷ *ⁱ y* and *c* ◁ *ⁱ y* may be complementary (in accordance with the above invertibility property).

Alternatively, in an instance in which the multiple public-private key pairs are incorporated in conjunction with the multiple encoding variables, the framework for secure communication may involve encrypting a message *(x)* into a ciphertext *(c)* using a set of encoding variables *(y*₁*, y*₂*, ... , yₙ*) and a plurality of public encryption keys (*e*₁*, e*₂, ... , *eₙ*)*,* and subsequently decoding the ciphertext *(c)* to generate a deciphered form *(x')* of the message *(x)* using the set of encoding variables *(y*₁*, y*₂*, ... , yₙ*) a plurality of private encryption keys (*f*₁*, f₂,* ... , *fₙ*)*.* In particular, the encryption process may be represented as, at each step, *c = x* ▷ *ⁱ yᵢ*, wherein $x {⊳}^{i} {y}_{i} = {y}_{i} ⋅ {\left(\frac{x ⊳ y i \left(i-1\right)}{{y}_{i}}\right)}^{{e}_{i}}$. The decryption process may be represented as, at each step, *x' = c ◁ ⁱ yᵢ*, wherein $c {⊲}^{i} {y}_{i} = {y}_{i} ⋅ {\left(\frac{c ⊲ y i \left(i-1\right)}{{y}_{i}}\right)}^{{f}_{i}}$. Here, at each step, *x* ▷ *ⁱ yᵢ* and *c* ◁ *ⁱ yᵢ* may be complementary (in accordance with the above invertibility property). Each *yᵢ* may be paired with corresponding public keys *eᵢ* and private keys *fᵢ*, satisfying the relationship *eᵢ · fᵢ = 1 mod ϕ*(*n*)*,* where *ϕ*(*n*) is either Euler's or Carmichael's totient function. Such a pairing enables reversible encryption, akin to RSA key generation, but harder to break.

The topological braiding complexity may be represented by two quandle operations, *Rᵢ* and *Lᵢ*, that are defined to perform algebraic manipulations for encryption and decryption. These operations correspond to topological crossing operations and algebraic quandle operations. The topological encryption is modeled using two vector-valued functions: *̅f̅*̅ (*x, y*₁*, y*₂, ... , *yₙ*)*,* which represents the encryption function, and *̅g̅*̅(*x', y*₁*, y*₂*, ... , yₙ*)*,* which represents the decryption function. The relationship *̅f̅*̅.*̅g̅*̅ = I ensures reversibility. This means applying the decryption function (*̅g̅*̅) to the result of the encryption function (*̅f̅*̅) results in the deciphered form *(x)* of the original message *(x).* The private keys embedded in *̅g̅*̅ are required for decryption and are kept secret. The public keys embedded in *̅f̅*̅ are shared for encryption, possibly as a black box whose inner workings are unknown to the users. The decoding party may retain exclusive access to the private keys as well as the right sequence of using them and thus can decode the encrypted message.

The cryptographic framework also supports various forms of homomorphic encryption (such as "partial," "somewhat homomorphic," "leveled full,"), enabling certain computations to be performed directly on the ciphertext without revealing the underlying plaintext. Specifically, the cryptographic framework supports homomorphic operations, both with respect to multiplication and generalized quandle distributivity. By incorporating quandle-based operations, the proposed framework extends classical cryptographic schemes, like RSA, to a more generalized and flexible model that supports secure and reversible operations on encrypted data yet enjoys a comparable encoding complexity. The additional decoding complexity introduced by the quandle algebraic structure, and the topological hardness enhances the cryptographic robustness, making it resistant to unauthorized access and suitable for modern applications requiring privacy-preserving computations, such as secure data analytics and collaborative environments.

Embodiments of the present disclosure will now be described more fully hereinafter with reference to the accompanying drawings, in which some, but not all, embodiments of the present disclosure are shown. Indeed, the present disclosure may be embodied in many different forms and should not be construed as limited to the embodiments set forth herein; rather, these embodiments are provided so that this disclosure will satisfy applicable legal requirements. Thus, it should be understood that each block of the block diagrams and flowchart illustrations may be implemented in the form of a computer program product; an entirely hardware embodiment; an entirely firmware embodiment; a combination of hardware, computer program products, and/or firmware; and/or apparatuses, systems, computing devices, computing entities, and/or the like carrying out instructions, operations, steps, and similar words used interchangeably (e.g., the executable instructions, instructions for execution, program code, and/or the like) on a computer-readable storage medium for execution. For example, retrieval, loading, and execution of code may be performed sequentially such that one instruction is retrieved, loaded, and executed at a time. In some exemplary embodiments, retrieval, loading, and/or execution may be performed in parallel such that multiple instructions are retrieved, loaded, and/or executed together. Thus, such embodiments may produce specifically-configured machines performing the steps or operations specified in the block diagrams and flowchart illustrations. Accordingly, the block diagrams and flowchart illustrations support various combinations of embodiments for performing the specified instructions, operations, or steps.

Where possible, any terms expressed in the singular form herein are meant to also include the plural form and vice versa, unless explicitly stated otherwise. Also, as used herein, the term "a" and/or "an" shall mean "one or more," even though the phrase "one or more" is also used herein. Furthermore, when it is said herein that something is "based on" something else, it may be based on one or more other things as well. In other words, unless expressly indicated otherwise, as used herein "based on" means "based at least in part on" or "based at least partially on." Like numbers refer to like elements throughout.

As used herein, "operatively coupled" may mean that the components are electronically or optically coupled and/or are in electrical or optical communication with one another. Furthermore, "operatively coupled" may mean that the components may be formed integrally with each other or may be formed separately and coupled together. Furthermore, "operatively coupled" may mean that the components may be directly connected to each other or may be connected to each other with one or more components (e.g., connectors) located between the components that are operatively coupled together. Furthermore, "operatively coupled" may mean that the components are detachable from each other or that they are permanently coupled together.

As used herein, "determining" may encompass a variety of actions. For example, "determining" may include calculating, computing, processing, deriving, investigating, ascertaining, and/or the like. Furthermore, "determining" may also include receiving (e.g., receiving information), accessing (e.g., accessing data in a memory), and/or the like. Also, "determining" may include resolving, selecting, choosing, calculating, establishing, and/or the like. Determining may also include ascertaining that a parameter matches a predetermined criterion, including that a threshold has been met, passed, exceeded, satisfied, etc.

It should be understood that the word "exemplary" is used herein to mean "serving as an example, instance, or illustration." Any implementation described herein as "exemplary" is not necessarily to be construed as advantageous over other implementations.

Furthermore, as would be evident to one of ordinary skill in the art in light of the present disclosure, the terms "substantially" and "approximately" indicate that the referenced element or associated description is accurate to within applicable engineering tolerances.

### Example Datacenter

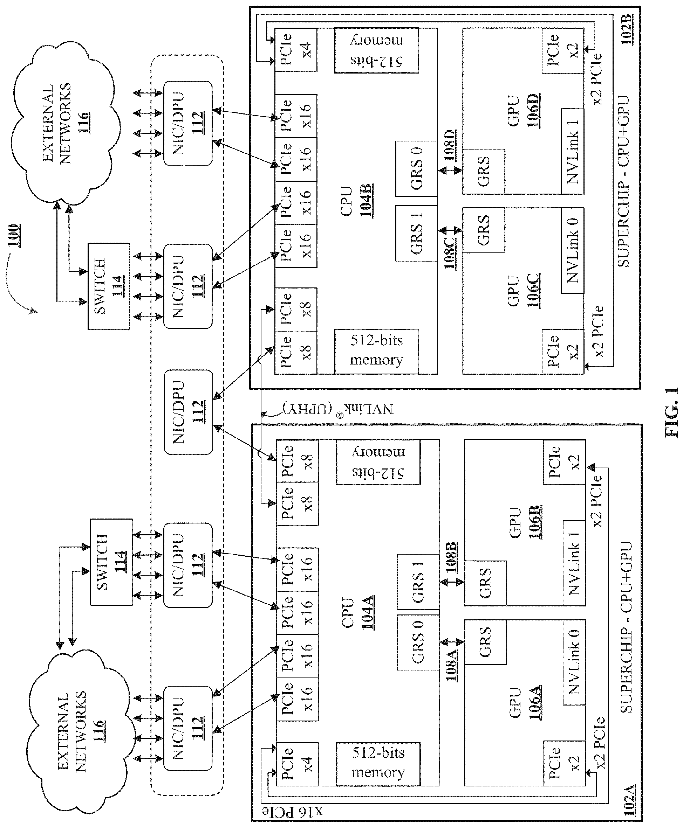

FIG. 1 illustrates a schematic diagram of an example datacenter 100, in accordance with an embodiment of the disclosure. The datacenter 100 may include high-performance computing (HPC) clusters 102A, 102B, network interface controller/data processing units (NIC/DPUs) 108, switches 114, external networks 116, and system 110. The HPC clusters 102A, 102B may house computing resources. The NIC/DPUs 112 may act as intermediate processing and management units that facilitate data transmission between HPC clusters 102A, 102B and datacenter switches 114. The datacenter switches 114 may manage and route data between the HPC clusters 102A, 102B and the external networks 116. The external networks 116 may connect the datacenter 100 to external devices, services, or other datacenters, enabling communication beyond the datacenter. The system 110 may serve as a centralized management and control system within datacenter 100, overseeing resource allocation, link management, and network optimization, according to various embodiments described herein.

HPC clusters (e.g., HPC clusters 102A, 102B) may house various computing resources designed to support computationally demanding tasks. These HPC clusters may include central processing units (CPUs), such as NVIDIA Grace^{™} CPUs, and graphics processing units (GPUs), such as NVIDIA^{®} H100 Tensor Core GPUs, memory modules, and interconnects to facilitate data exchange and processing. In example embodiments, each HPC cluster may be configured to handle specific types of workloads, such as general-purpose computing, data processing, specialized tasks like artificial intelligence (AI) and machine learning (ML) applications, and/or the like. For example, NVIDIA^{®} Tensor Core GPUs may be used to accelerate AI and ML workloads by performing parallel processing of large datasets. The configuration of the HPC clusters may be scalable, allowing for additional compute nodes, such as those with GPUs and CPUs, to be added or removed as needed based on computing requirements.

In specific embodiments, the CPU and/or the GPUs, or portions or components thereof, may be embodied as or include a chip or chipset. In other words, the CPU and/or the GPUs may include physical packages (e.g., chips) including materials, components, and/or wires on a structural assembly (e.g., a baseboard). The structural assembly may provide physical strength, conservation of size, and/or limitation of electrical interaction for component circuitry included thereon. The CPU and/or the GPUs, may therefore, in some cases, be configured to implement an embodiment of the disclosure on a single chip or as a single "system on a chip (SoC)." As such, in some cases, a chip or chipset may constitute means for performing one or more operations for providing the functionalities described herein. In this configuration, the CPU may be coupled to a GPU via die-to-die (D2D) interconnects, chip-to-chip (C2C) interconnects, such as a Ground-Referenced Signaling (GRS) interconnect, and/or the like, allowing for low-latency communication and high bandwidth between the CPU and GPU. Additionally, the CPU can connect to multiple GPUs using both D2D/C2C interconnects and high-speed interconnects, such as PCIe interconnects, such as PCIe Gen 5 x16 lanes. Within each HPC cluster, the GPUs may also be operatively coupled to one another to facilitate direct GPU-to-GPU communication using high-speed interconnect technologies such as NVLink^{®} or other interconnects specifically designed for direct GPU communication. NVLink^{®} may provide a high-bandwidth, low-latency communication channel between GPUs, supporting data synchronization and sharing for tasks that require significant inter-GPU communication, such as matrix computations, simulations, or AI model training.

In the embodiment shown in FIG. 1, CPU 104A is operatively coupled to GPUs 106A and 106B via GRS-compatible interconnects, 108A and 108B, and CPU 104B is operatively coupled to GPUs 104C and 106D via GRS-compatible interconnects, 108C and 108D. Each CPU may include GRS-compatible ports, such as GRS 0 and GRS 1, which are configured to interface with corresponding GRS ports on the GPUs. For example, CPU 104A may utilize its GRS 0 port to connect to GPU 106A and its GRS 1 port to connect to GPU 106B, while CPU 104B may use its GRS 0 and GRS 1 ports to connect to GPUs 104C and 106D, respectively. The GRS-compatible interconnects may provide pathways for data exchange, workload distribution, and processing synchronization between the CPUs and GPUs, supporting high-bandwidth, low-latency communication. Alternatively or additionally, the CPUs 104A and 104B may be operatively coupled to GPUs 106A, 1046, 106C, and 106D via PCIe interconnects. These PCIe interconnects may utilize multi-lane configurations, such as PCIe Gen 4 or Gen 5 x16 lanes, to provide high-bandwidth, scalable data transfer channels between the CPUs and GPUs. In this configuration, the PCIe interconnects may support dynamic link width adjustments, allowing the bandwidth to scale based on workload intensity, thereby optimizing resource allocation within the system.

GPUs 106A and 106B within HPC cluster 102A and GPUs 104C and 106D within HPC cluster 102B may be interconnected via NVLink^{®} interconnects via NVLink^{®} compatible ports, NVLink 0 and NVLink 1 respectively, allowing coordinated parallel processing across GPUs for computationally demanding workloads. HPC clusters 102A and 102B may be interconnected through high-bandwidth interconnect, such as an NVLink^{®} or Unified Physical Layer (UPHY) interconnect, allowing for data transfer and synchronization between the server systems. The high-bandwidth interconnect may support parallel processing and may improve the overall computational throughput of the HPC cluster, making it suitable for applications like artificial intelligence (AI), machine learning (ML), and data-intensive simulations. Each CPU (e.g., 104A) within a HPC cluster (e.g., 102A) may be equipped with memory modules, such as a 512-bit memory module, to provide data access for both CPUs and GPUs. The memory modules may be directly connected to the respective CPUs, reducing latency and supporting high-speed operations.

As shown in FIG. 1, the HPC clusters 102A and 102B may be operatively coupled to NIC/DPUs 112, enabling efficient offloading of data processing and security tasks, further reducing the computational burden on the server CPUs and improving overall data flow within the rack. Each NIC/DPU 112 may integrate NIC and DPU functionalities to enhance the efficiency of data center operations. The NIC/DPU 112 may be configured to offload various network, storage, and security tasks from the HPC clusters (e.g., HPC cluster 102A, 102B), in particular, CPUs in the HPC clusters, allowing the CPUs to focus on compute-intensive workloads. The NIC/DPU 112 may facilitate high-speed data transmission, optimize data flow, and enable advanced network services with minimal impact on server performance. The NIC component within the NIC/DPU 112 may handle standard network functions, such as packet transmission and reception, supporting high-speed Ethernet or InfiniBand^{®} protocols. By facilitating fast data transfers between the HPC clusters 102A and 102B and external networks 116, the NIC enables efficient communication across the datacenter environment. The NIC may also support offloading network protocol processing, reducing the overhead on HPC clusters 102A and 102B, in particular, CPUs in the HPC clusters 102A and 102B, and improving overall data throughput. The DPU component of the NIC/DPU 112 may extend these capabilities by offloading more advanced processing tasks, such as data encryption and decryption, packet inspection and filtering, virtualization support, and/or the like. In example embodiments, DPU may be NVIDIA BlueField^{®}-2 DPUs, which provide a high-performance platform for data center acceleration. The BlueField-2 architecture may include up to 8 Arm cores, enabling the NIC/DPU 112 to execute network, storage, and security tasks independently of the HPC clusters, in particular, CPUs in the HPC clusters. By performing these tasks closer to the data source, the NIC/DPU 112 may reduce data movement across the network, lower latency, and enhance overall system efficiency.

The NIC/DPU 112 may also include a dedicated memory subsystem, such as dynamic random-access memory (DRAM), to support local processing and ensure high-speed data access. Additionally, the NIC/DPU 112 may be configured to manage NVMe over Fabrics (NVMe-oF) storage protocols, allowing for efficient remote storage access and fast data retrieval. The combined NIC and DPU functionalities within the NIC/DPU 112 may support various advanced networking features, including traffic shaping and load balancing, remote direct memory access (RDMA), virtual machine and container isolation, and/or the like.

Switches 114 may manage the data flow between the HPC clusters 102A, 102B and the external networks 116. The switches 114 may be responsible for routing and distributing data between servers within the datacenter and facilitating communication with external networks. Switches 114 may be configured to support various high-speed network protocols, such as Ethernet or InfiniBand^{®} protocols, depending on the performance and bandwidth requirements of the datacenter. The switches 114 may include optical switches, which use light signals for data transmission, offering high bandwidth and low latency for long-distance communication. Alternatively, the switches 114 may include electrical switches, which rely on electronic signals and may be used for shorter distances or when lower latency is a priority. In some configurations, hybrid switches may be used, combining both optical and electrical components to balance performance and flexibility. The switches 114 may be advanced networking switches, such as Nvidia Quantum-2 switches, configured to provide high throughput capabilities. The switches 114 may operate at different layers of the network stack, including Layer 2 (data link layer) and Layer 3 (network layer), to perform switching and routing functions. Multiple switches 114 may be interconnected to provide redundancy and load balancing for reliable data transfer even if one switch fails. The switches 114 may support scalable configurations, allowing the network architecture to expand as additional HPC clusters 102A, 102B or external networks 116 are introduced.

In certain embodiments, the number and arrangement of switches 114 within the datacenter 100 may be based on the overall network topology deployed in the datacenter environment. The choice of network topology may influence the scalability, performance, fault tolerance, and bandwidth distribution of the network, thus affecting how many switches are required and how they are interconnected. Examples of network topology may include fat-tree topology, SlimFly topology, dragonfly topology, HyperX topology, torus topology, Clos (folded-Clos) topology, mesh topology and/or the like. For instance, in a fat-tree topology, the network is structured as a multi-tiered hierarchy with equal-cost paths between any two endpoints. The fat-tree topology may be built using three layers of switches: leaf switches at the bottom layer, directly connected to the HPC clusters 102A, 102B, spine switches in the middle layer, which interconnect the leaf switches, and core switches at the top, which interconnect multiple sets of spine switches. In a SlimFly topology, the switches 114 may be arranged to minimize the average path length between servers, reducing communication latency. The total number of switches 114 may be fewer than in fat-tree topology, but their arrangement may be more complex to optimize the number of direct and indirect connections between nodes. Dragonfly topology may organize switches into groups (or "pods"), with high-bandwidth connections within each group and lower-bandwidth connections between groups. The switches 114 may be arranged into several pods, with each pod containing a set of leaf switches connected to HPC clusters 102A, 102B and local spine switches. In addition, there may be fewer inter-pod connections than intra-pod connections. In hyperX topology, switches may be arranged in a multi-dimensional grid, with each switch connected to multiple neighboring switches in different dimensions. The total number of switches may scale with the number of dimensions and network size. In a torus topology, the switches 114 may be connected in a loop or ring structure. Torus topology may offer reduced wiring complexity and built-in redundancy, as each switch is connected to multiple adjacent switches. In larger datacenters, a higher-dimensional torus (e.g., 3D or 4D torus) may be implemented, where switches are arranged in a multi-layered grid. In a Clos topology, also known as a folded-Clos or CLOS architecture, the switches 114 may be arranged in multiple layers of switching stages, with each stage containing multiple switches. In this configuration, each server system 102 may connect to a set of leaf switches, which in turn connect to multiple spine switches. Additional spine and leaf switches may be added as the network grows, with the number of switches 114 increasing in proportion to the number of server systems and external networks connected.

The external networks 116 represent a range of connectivity options that facilitate communication between the datacenter and various external systems, such as other datacenters, cloud service providers, and/or the like. These external networks 116 may include local area networks (LANs), which connect devices within a limited geographical area, as well as WANs that span larger distances and connect multiple LANs. Additionally, external networks 116 may include cloud networks, which provide scalable resources and services hosted remotely, and private networks, which offer secure communication channels for sensitive data transfer. Other types of external networks may include virtual private networks (VPNs) that enable secure access over the internet and Content Delivery Networks (CDNs) that optimize the delivery of content to end-users. Each of these external networks may utilize various communication protocols, such as Ethernet, InfiniBand^{®}, or MPLS (Multiprotocol Label Switching) protocols, to ensure reliable and efficient data transfer.

The cryptographic framework described herein can be effectively implemented within a datacenter environment (e.g., datacenter 100) to improve secure data processing, transmission, and storage. The HPC clusters, NIC/DPUs, switches, and external networks illustrated in FIG. 1 can be leveraged to deploy the cryptographic systems and methods.

For instance, the HPC clusters 102A and 102B, equipped with CPUs and GPUs such as NVIDIA Grace^{™} CPUs and NVIDIA H100 Tensor Core GPUs, provide the computational resources necessary to execute the encryption and decryption algorithms efficiently. These clusters are well-suited for performing the computationally intensive tasks required for quandle-based cryptographic operations, including large-scale matrix manipulations, topological transformations, and polynomial calculations inherent in knot theory. The CPUs and GPUs within the HPC clusters, interconnected via high-speed technologies such as NVLink^{®} and PCIe, can accelerate the processing of the binary quandle operations ▷ and ◁. The CPUs may handle the management of public and private key generation, while the GPUs can parallelize the encryption and decryption processes, ensuring minimal latency even for large datasets.

The NIC/DPUs 112, such as NVIDIA BlueField^{®}-2 DPUs, provide an additional layer of functionality by offloading network, storage, and security tasks from the CPUs within the HPC clusters. These DPUs can be configured to execute encryption and decryption at the network level, enabling secure data transmission across the datacenter and to external networks 116. The integration of dynamic memory within the NIC/DPUs allows for the efficient handling of encryption keys and encoding variables, ensuring secure, low-latency operations.

The switches 114 within the datacenter can route encrypted data between the HPC clusters and external networks, maintaining high-speed, secure communication channels. These switches, capable of operating under advanced topologies such as fat-tree or dragonfly, ensure scalable and fault-tolerant data transfer. The cryptographic framework may be integrated into this topology to enable real-time encryption and decryption of data packets as they traverse the network.

The external networks 116, which may include LANs, WANs, and cloud-based services, provide avenues for securely transmitting encrypted data to and from the datacenter. The cryptographic framework ensures that data remains secure during transit, leveraging its inherent resistance to quantum and classical attacks. By deploying the described cryptographic framework in a datacenter, operators can achieve enhanced data security across various operations, including secure communications, storage, and distributed computing tasks.

It should be noted that the description provided herein is merely one embodiment of the datacenter 100 and the associated components, including the switches 114 and the NIC/DPU 112. Various modifications, alterations, and adaptations may be made without departing from the scope of the disclosure. The specific configurations, components, and functionalities described are illustrative and may be replaced or modified in other embodiments depending on the particular requirements of the datacenter environment. For example, different network topologies, alternative processing units, or variations in server configurations may be used to achieve similar objectives. As such, the scope of the invention should not be limited by the described embodiment.

### Example System Environment

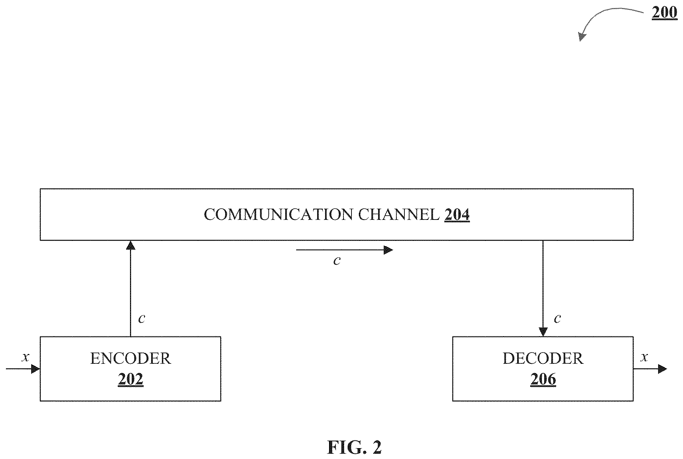

FIG. 2 illustrates an example system environment 200 for secure communication, in accordance with an embodiment of the present invention. As shown in FIG. 2, the system environment 200 may include an encoder 202, a communication channel 204, and a decoder 206.

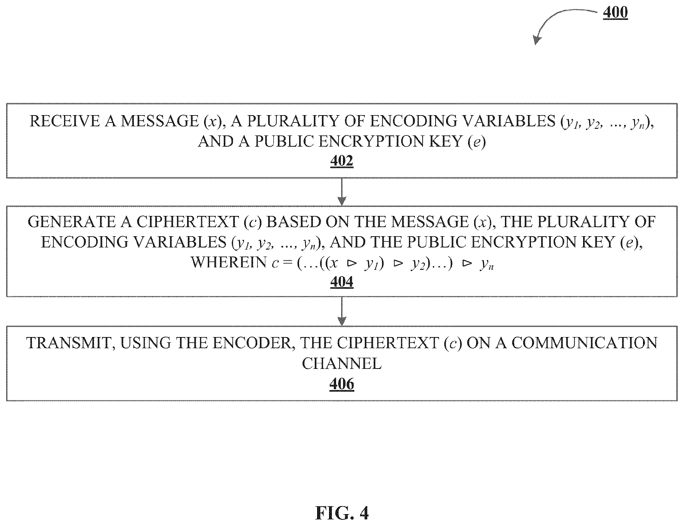

The encoder 202 may be configured to transform plaintext (e.g., message (x)) data into a secure, encrypted format (e.g., ciphertext (c)), using a predetermined algorithm to ensure the confidentiality, integrity, and authenticity of the data during transmission. In this regard, the encoder 202 may be configured to implement a quandle algebra-based encryption technique (described in further detail below in connection with FIGs. 4-7) as the basis for security.

The encoder 202 may be realized through various implementation modalities, including but not limited to software applications executed on general-purpose computing devices, which afford significant flexibility and ease of updates through the utilization of central processing unit (CPU) capabilities to execute encryption algorithms. Alternatively or additionally, in some environments, such as environments necessitating high-speed data transmission, the encoder 202 may be embodied in dedicated hardware forms, such as Application-Specific Integrated Circuits (ASICs) or Field-Programmable Gate Arrays (FPGAs). Alternatively or additionally, the encoder 202 may be implemented in a hybrid implementation that combines software flexibility with hardware acceleration. Alternatively or additionally, the encoder 202 may be provisioned as a cloud-based service, embodying encryption as a service (EaaS) to offer scalability and accessibility. Alternatively or additionally, and specifically in contexts where computing resources are limited, the encoder 202 may be integrated into the firmware of embedded systems, providing encryption capabilities directly within devices such as Internet of Things (IoT) devices or mobile phones.

The encoder 202 may be implemented in a datacenter environment (e.g., datacenter 100) using various modalities tailored to the needs of high-performance, scalable, and secure encryption. For instance, in a datacenter, the encoder 202 could be deployed as a software-based service operating on HPC clusters, leveraging the computational power of CPUs and GPUs to execute complex encryption algorithms efficiently. In scenarios requiring low latency, the encoder 202 may be embodied as dedicated hardware, such as FPGAs or ASICs, integrated into the datacenter infrastructure to accelerate quandle-based encryption processes. Additionally, the encoder 202 may be realized as part of a hybrid configuration within the datacenter, where CPUs and GPUs perform high-level encryption logic, while hardware accelerators handle computationally intensive tasks. Alternatively, the encoder 202 could be provisioned as an Encryption-as-a-Service (EaaS) offering within the datacenter, providing scalable encryption resources for external and internal data processing needs. Furthermore, the encoder 202 could be embedded in the firmware of NIC/DPUs deployed within the datacenter to facilitate secure data transmission at the network layer.

The communication channel 204 may serve as the medium over which the encrypted data (e.g., ciphertext (c)) is transmitted from the encoder to the decoder. The communication channel 204 may be characterized by its functional capacity to facilitate secure data transfer rather than by the specific nature or technology of the transmission medium employed. As such, while the communication channel 204 may employ various forms of digital transmission mediums - including, but not limited to, wired networks, wireless networks (e.g., radio frequency communication), optical transmission networks (e.g., optical transmission media), and satellite communication networks-this disclosure is not limited to these examples. The term 'digital transmission medium' as used herein is intended to encompass any technology or method capable of carrying digital information between two points, irrespective of the physical form or technological implementation of said technology or method. Furthermore, the communication channel 204 is presumed to operate in environments where the security of the channel itself cannot be inherently guaranteed, acknowledging the potential presence of eavesdroppers or malicious entities. Thus, the integrity and confidentiality of the data transmitted over this channel are maintained solely through the use of the encryption techniques discussed herein. For example, the communication channel 204 may be implemented using network connections such as Ethernet, InfiniBand, NVLink, or PCIe, which may support various communication protocols. In some implementations, the communication channel 204 may facilitate data transfer using protocols such as NVMe for communication with data storage units or other high-speed data transfer protocols optimized for low-latency and high-throughput transmission.

In a datacenter environment, the communication channel 204 may be implemented as part of the high-speed, high-bandwidth infrastructure designed to facilitate secure and efficient data transmission between the encoder and decoder, as well as across various nodes and external networks. Within the datacenter, the communication channel 204 may include physical and virtual pathways, such as Ethernet connections, InfiniBand^{®} interconnects, NVLink^{®} interfaces, and other advanced network protocols optimized for low-latency, high-throughput data transfer. For example, encrypted data (e.g., ciphertext (c)) generated by the encoder may traverse through NIC/DPUs integrated with the datacenter architecture, leveraging technologies like NVIDIA BlueField^{®}-2 DPUs to offload network tasks and ensure secure transmission of encrypted data packets. Additionally, the communication channel 204 may include optical transmission pathways, such as fiber-optic networks, for long-distance or high-speed interconnectivity between datacenter nodes or external entities. In scenarios requiring ultra-low latency and high redundancy, the communication channel 204 may leverage topologies like fat-tree or dragonfly, to set up multiple secure paths for data transfer within the datacenter. Furthermore, the communication channel 204 may utilize dynamic routing algorithms implemented in advanced switches, such as NVIDIA Quantum-2 switches, to manage and optimize the flow of encrypted data across various layers of the network stack.

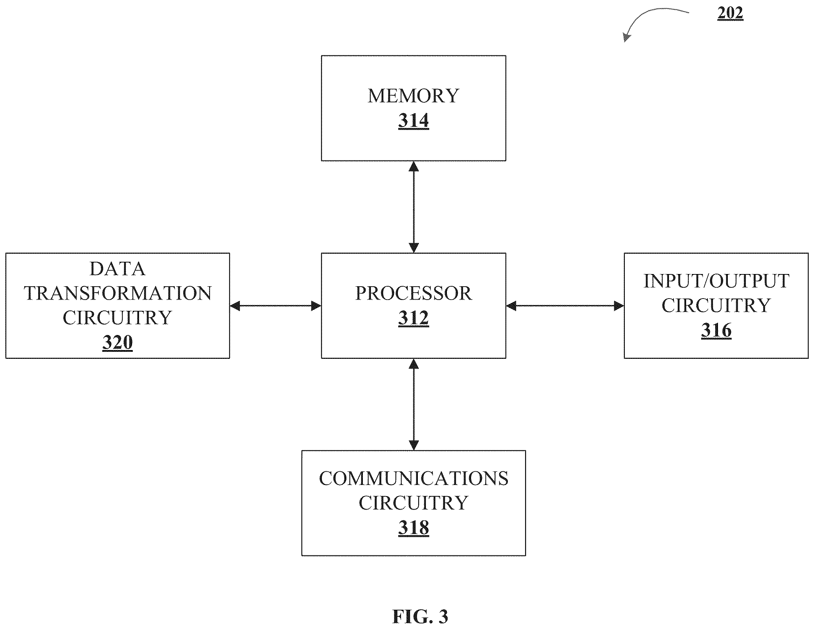

The decoder 206 may be configured to transform encrypted data (e.g., ciphertext (c)) back into its original form (e.g., message (x)) using a predetermined algorithm to ensure the secure and accurate reconstruction of the data. In this regard, the decoder 206 may be configured to implement a quandle algebra-based decryption technique (described in further detail below in connection with FIGS. 3 and 4), corresponding to the encryption technique used by the encoder 202, to ensure compatibility and maintain the confidentiality, integrity, and authenticity of the data during its reconstitution. Similar to the encoder 202, the decoder 206 may be implemented in various forms, including a software solution on computing devices, dedicated hardware optimized for decryption, a hybrid model that leverages the strengths of both software and hardware, as a cloud-based decryption service, within embedded systems, matching the encoder's flexibility and adaptability, and/or the like.

In a datacenter environment (e.g., datacenter 100), the decoder 206 may be implemented to efficiently and securely transform encrypted data (e.g., ciphertext (c)) back into its original form (e.g., message (x)) using high-performance infrastructure tailored for decryption tasks. The decoder 206 may operate as a software-based solution deployed on HPC clusters, utilizing the computational power of CPUs and GPUs to execute complex quandle algebra-based decryption algorithms efficiently. This approach provides flexibility and scalability, ensuring compatibility with the encoder's encryption techniques while handling large volumes of encrypted data with minimal latency. Alternatively or additionally, the decoder 206 may be realized in dedicated hardware forms, such as ASICs or FPGAs, integrated into the datacenter's architecture to accelerate decryption processes. These hardware implementations are particularly effective in scenarios demanding low-latency and high-throughput decryption, ensuring the rapid reconstitution of data for time-sensitive applications. A hybrid implementation may combine software and hardware capabilities, where CPUs and GPUs handle high-level decryption logic while hardware accelerators such as FPGAs manage computationally intensive quandle operations. Additionally, the decoder 206 may be provisioned as part of a Decryption-as-a-Service (DaaS) model in a cloud-based datacenter environment. Such a setup allows scalable decryption capabilities to support external clients or internal datacenter processes, leveraging the inherent elasticity of cloud infrastructure to adapt to varying workloads. In specific instances, the decoder 206 may also be integrated into the firmware of NIC/DPUs deployed within the datacenter, enabling decryption directly at the network layer.

It is to be understood that the descriptions provided herein for the implementation forms of the encoder 202 and decoder 206 are illustrative rather than exhaustive. The scope of the invention encompasses all possible variations, modifications, and configurations of these components that adhere to the underlying principles of the secure communication system, including future advancements in technology that may introduce new forms of implementation.

Furthermore, it is to be understood that the structure of the system environment 200 and its components, connections and relationships, and their functions, are meant to be exemplary only, and are not meant to limit implementations of the disclosures described and/or claimed in this document. In one example, the system environment 200 may include more, fewer, or different components. In another example, some or all of the portions of the system environment 200 may be combined into a single portion or all of the portions of the environment 200 may be separated into two or more distinct portions.

### Example Device Circuitry

FIG. 3 illustrates a schematic block diagram of example device circuitry, in accordance with an embodiment of the present invention. As described herein, the encoder 202 and the decoder 206 may embody the same or substantially similar structural configurations. Therefore, while the ensuing description focuses on the device circuitry of the encoder 202, it is to be understood that the decoder 206 may possess an analogous or essentially equivalent device circuitry. This parallelism in structure and function between the two devices 202, 206 implies that descriptions, illustrations, and technical details pertaining to the device circuitry of the encoder 202 are equally applicable and representative of the decoder 206, unless otherwise specified.

As shown in FIG. 3, the encoder 202 may include a processor 312, a memory 314, input/output circuitry 316, communications circuitry 318, and a data transformation circuitry 320.

Although the term "circuitry" as used herein with respect to components 312-320 is described in some cases using functional language, it should be understood that the particular implementations necessarily include the use of particular hardware configured to perform the functions associated with the respective circuitry as described herein. It should also be understood that certain of these components 312-320 may include similar or common hardware. For example, two sets of circuitries may both leverage use of the same processor, network interface, storage medium, or the like to perform their associated functions, such that duplicate hardware is not required for each set of circuitries. It will be understood in this regard that some of the components described in connection with the encoder 202 may be housed together, while other components are housed separately (e.g., a controller in communication with the encoder 202). While the term "circuitry" should be understood broadly to include hardware, in some embodiments, the term "circuitry" may also include software for configuring the hardware. For example, in some embodiments, "circuitry" may include processing circuitry, storage media, network interfaces, input/output devices, and the like. In some embodiments, other elements of the encoder 202 may provide or supplement the functionality of particular circuitry. For example, the processor 312 may provide processing functionality, the memory 314 may provide storage functionality, the communications circuitry 318 may provide network interface functionality, and the like.

In some embodiments, the processor 312 (and/or co-processor or any other processing circuitry assisting or otherwise associated with the processor) may be in communication with the memory 314 via a bus for passing information among components of, for example, the encoder 202. The memory 314 may be non-transitory and may include, for example, one or more volatile and/or non-volatile memories, or some combination thereof. In other words, for example, the memory 314 may be an electronic storage device (e.g., a non-transitory computer readable storage medium). The memory 314 may be configured to store information, data, content, applications, instructions, or the like, for enabling an apparatus, e.g., the encoder 202, to carry out various functions in accordance with example embodiments of the present disclosure.

Although illustrated in FIG. 3 as a single memory, the memory 314 may comprise a plurality of memory components. The plurality of memory components may be embodied on a single computing device or distributed across a plurality of computing devices. In various embodiments, the memory 314 may comprise, for example, a hard disk, random access memory, cache memory, flash memory, a compact disc read only memory (CD-ROM), digital versatile disc read only memory (DVD-ROM), an optical disc, circuitry configured to store information, or some combination thereof. The memory 314 may be configured to store information, data, applications, instructions, or the like for enabling the encoder 202 to carry out various functions in accordance with example embodiments discussed herein. For example, in at least some embodiments, the memory 314 may be configured to buffer data for processing by the processor 312. Additionally, or alternatively, in at least some embodiments, the memory 314 may be configured to store program instructions for execution by the processor 312. The memory 314 may store information in the form of static and/or dynamic information. This stored information may be stored and/or used by the encoder 202 during the course of performing its functionalities.

The processor 312 may be embodied in a number of different ways and may, for example, include one or more processing devices configured to perform independently. Additionally, or alternatively, the processor 312 may include one or more processors configured in tandem via a bus to enable independent execution of instructions, pipelining, and/or multithreading. The processor 312 may, for example, be embodied as various means including one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an ASIC (application specific integrated circuit) or FPGA (field programmable gate array), or some combination thereof. The use of the term "processing circuitry" may be understood to include a single core processor, a multi-core processor, multiple processors internal to the apparatus, and/or remote or "cloud" processors. Accordingly, although illustrated in FIG. 3 as a single processor, in some embodiments, the processor 312 may include a plurality of processors. The plurality of processors may be embodied on a single computing device or may be distributed across a plurality of such devices collectively configured to function as the encoder 202. The plurality of processors may be in operative communication with each other and may be collectively configured to perform one or more functionalities of the encoder 202 as described herein.

In an example embodiment, the processor 312 may be configured to execute instructions stored in the memory 314 or otherwise accessible to the processor 312. Alternatively, or additionally, the processor 312 may be configured to execute hard-coded functionality. As such, whether configured by hardware or software methods, or by a combination thereof, the processor 312 may represent an entity (e.g., physically embodied in circuitry) capable of performing operations according to an embodiment of the present disclosure while configured accordingly. Alternatively, as another example, when the processor 312 is embodied as an executor of software instructions, the instructions may specifically configure the processor 312 to perform one or more algorithms and/or operations described herein when the instructions are executed. For example, these instructions, when executed by the processor 312, may cause the encoder 202 to perform one or more of the functionalities thereof as described herein.

In some embodiments, the encoder 202 may further include input/output circuitry 316 that may, in turn, be in communication with the processor 312 to provide an audible, visual, mechanical, or other output and/or, in some embodiments, to receive an indication of an input (e.g., the message (x)) from a user or another source. In that sense, the input/output circuitry 316 may include means for performing analog-to-digital and/or digital-to-analog data conversions. The input/output circuitry 316 may include support, for example, for a display, touchscreen, keyboard, mouse, image capturing device (e.g., a camera), microphone, and/or other input/output mechanisms. The input/output circuitry 316 may include a user interface and may include a web user interface, a mobile application, a kiosk, or the like.

The processor 312 and/or user interface circuitry comprising the processor 312 may be configured to control one or more functions of a display or one or more user interface elements through computer-program instructions (e.g., software and/or firmware) stored on a memory accessible to the processor 312 (e.g., the memory 314, and/or the like). In some embodiments, aspects of input/output circuitry 316 may be reduced as compared to embodiments where the encoder 202 may be implemented as an end-user machine or other type of device designed for complex user interactions. In some embodiments (like other components discussed herein), the input/output circuitry 316 may be eliminated from the encoder 202. The input/output circuitry 316 may be in communication with memory 314, communications circuitry 318, and/or any other component(s), such as via a bus. Although more than one input/output circuitry and/or other component can be included in the encoder 202, only one is shown in FIG. 3 to avoid overcomplicating the disclosure (e.g., as with the other components discussed herein).

The communications circuitry 318, in some embodiments, includes any means, such as a device or circuitry embodied in either hardware, software, firmware or a combination of hardware, software, and/or firmware, that is configured to receive and/or transmit data from/to a network and/or any other device, circuitry, or module associated therewith. In this regard, the communications circuitry 318 may include, for example, a network interface for enabling communications with a wired or wireless communication network (e.g., communication channel 204). For example, in some embodiments, communications circuitry 318 may be configured to receive and/or transmit any data that may be stored by the memory 314 using any protocol that may be used for communications between computing devices. For example, the communications circuitry 318 may include one or more communication ports, network interface cards, antennae, transmitters, receivers, buses, switches, routers, modems, and supporting hardware and/or software, and/or firmware/software, or any other device suitable for enabling communications via a network. Additionally, or alternatively, in some embodiments, the communications circuitry 318 may include circuitry for interacting with the antenna(s) to cause transmission of signals via the antenna(e) or to handle receipt of signals received via the antenna(e). These signals may be transmitted by the encoder 202 using any of a number of wireless personal area network (PAN) technologies, such as Bluetooth^{®} v1.0 through v5.0, Bluetooth Low Energy (BLE), infrared wireless (e.g., IrDA), ultra-wideband (UWB), induction wireless transmission, or the like. In addition, it should be understood that these signals may be transmitted using Wi-Fi, Near Field Communications (NFC), Worldwide Interoperability for Microwave Access (WiMAX) or other proximity-based communications protocols. The communications circuitry 318 may additionally or alternatively be in communication with the memory 314, the input/output circuitry 316, and/or any other component of the encoder 202, such as via a bus. The communication circuitry 318 of the encoder 202 may also be configured to receive and transmit information to and from the various components associated therewith.

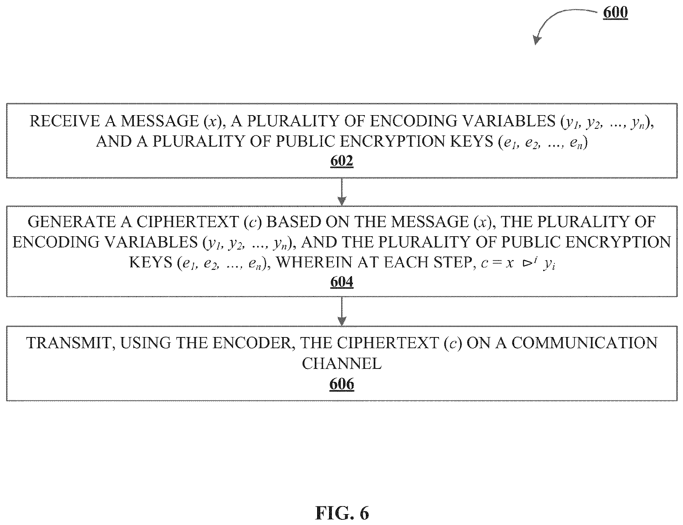

As part of the encoder 202, in some embodiments, the data transformation circuitry 320 may be configured to execute the data transformation logic to transmute the data from its initial state, (e.g., message (x)), into an encrypted format, (e.g., ciphertext (c)). As described herein, the transformation may employ a public-key cryptographic system that leverages the computational difficulty of factoring large numbers within the context of a quandle and/or rack algebra-based encryption framework. The quandle and/or rack algebra-based encryption algorithm operationalized by the data transformation circuitry 320 may involve: the generation of a public-private key pair(s) (public key(s) for encryption and a private key(s) for decryption) by an intended recipient (e.g., decoder 206, shown in FIG. 2), the encryption of the message (x) using the public key(s), and the production of ciphertext (c) that can only be decrypted by the corresponding private key(s). As such, the data transformation circuitry 320 may facilitate the encoding process through modular exponentiation, as described herein with respect to FIGs. 4 and 6.

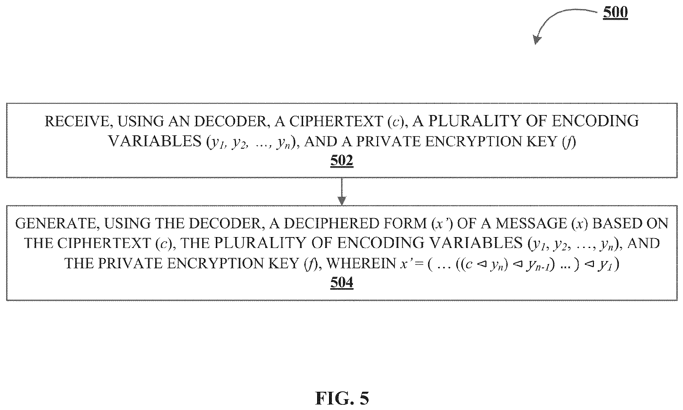

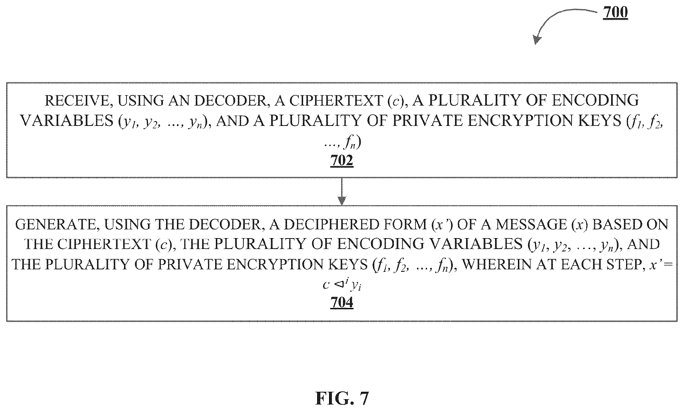

As applied to the decoder 206 shown in FIG. 2 (for example, when the decoder is configured similarly to the encoder 102 as depicted in FIG. 3), in some embodiments, the data transformation circuitry 320 may be configured to implement the inverse data transformation logic, deciphering the encrypted data (e.g., ciphertext (c)) into a deciphered form *(x')* of the original message (e.g., message (x)). This decryption process is based on the utilization of the private key(s), which may be uniquely associated with the public key(s) used for encryption. The data transformation circuitry 320 may decode the ciphertext (c) through inverse modular exponentiation, as described herein with respect to FIGs. 5 and 7.

In some embodiments, the encoder 202 may include hardware, software, firmware, and/or a combination of such components, configured to support various aspects of encryption as described herein. It should be appreciated that in some embodiments, the data transformation circuitry 320 may perform one or more of such example actions in combination with another circuitry of the encoder 202, such as the memory 314, processor 312, input/output circuitry 316, and/or communications circuitry 318. For example, in some embodiments, the data transformation circuitry 320 may utilize the processing circuitry, such as the processor 312 and/or the like, to form a self-contained subsystem to perform one or more of its corresponding operations. In a further example, and in some embodiments, some or all of the functionality of the data transformation circuitry 320 may be performed by the processor 312. In this regard, some or all of the example processes and algorithms discussed herein can be performed by at least one processor 312 and/or the data transformation circuitry 320. It should also be appreciated that, in some embodiments, the data transformation circuitry 320 may include a separate processor, specially configured field programmable gate array (FPGA), or application specific interface circuit (ASIC) to perform its corresponding functions.

Additionally, or alternatively, in some embodiments, the data transformation circuitry 320 may use the memory 314 to store collected information. For example, in the encoder 202, in some implementations, the data transformation circuitry 320 may include hardware, software, firmware, and/or a combination thereof, that interacts with the memory 314 to store the message (*x*)) that is to be encrypted, temporarily hold the data during the encryption process, cache frequently accessed data to expedite encryption process, and/or log encryption parameters and metadata. In the decoder 206, in some implementations, the data transformation circuitry 320 may include hardware, software, firmware, and/or a combination thereof, that interacts with the memory 314 to store encrypted data (e.g., ciphertext (c)) upon receipt and before decryption, buffer the ciphertext during the decryption process, cache key decryption parameters and frequently accessed data, and log decryption activities such as key usage and metadata.

Accordingly, non-transitory computer readable storage media, which may, for example, be the memory 314, can be configured to store firmware, one or more application programs, and/or other software, which include instructions and/or other computer-readable program code portions that can be executed to direct operation of the encoder 202 to implement various operations, including the examples described herein. As such, a series of computer-readable program code portions may be embodied in one or more computer-program products and can be used, with a device, encoder 202, database, and/or other programmable apparatus, to produce the machine-implemented processes discussed herein. It is also noted that all or some of the information discussed herein can be based on data that is received, generated and/or maintained by one or more components of the encoder 202. In some embodiments, one or more external systems (such as a remote cloud computing and/or data storage system) may also be leveraged to provide at least some of the functionality discussed herein.

It should be recognized that the structure of the encoder 202, as detailed herein, represents merely one embodiment among a multitude of potential configurations. This particular structure of the encoder 202, as described herein, demonstrates a specific arrangement and interaction of its components-encompassing data processing units, network interfaces, and data transformation circuitry-that collectively contribute to its comprehensive network capabilities. However, this outlined configuration is not definitive or limiting. The structure of the encoder 202 and its integral components can be varied to adapt to different networking paradigms, technological evolutions, and specific application needs. Thus, while the present disclosure depicts one potential structure for the encoder 202, it is to be understood that this represents just one exemplification within the broader realm of network-enabled devices. The scope of the invention is, therefore, not confined to this singular form but is extendable to various other forms, technologies, and configurations.

### Example Method for Encrypting a Message Using a Public Encryption Key and a Plurality of Encoding Variables

FIG. 4 illustrates an example method 400 for encrypting a message using a public encryption key and a plurality of encoding variables, in accordance with an embodiment of the invention. As shown in block 402, an encoder (such as the encoder 102 shown in FIG. 2 and configured as shown and described above in connection with FIG. 3) may receive a message (x), a plurality of encoding variables *(y*₁*, y*₂*, ..., yₙ*)*,* and a public encryption key (e).

The message (x) may refer to the original, unencrypted data or plaintext that is to be encrypted by the encryption algorithm. The nature of the message (x) can vary widely depending on its intended use and the context in which it is being communicated. For example, the message (x) may be textual data, such as messages, emails, documents, and/or the like; numerical data, such as financial information, scientific data, and/or the like; and/or multimedia data, such as images, audio, and video files, and/or the like. Similarly, the structure of the message (x) may also depend on its intended use and context. For example, the message (x) may be linear text, where the data is a sequence of characters or numbers, often with a defined beginning and an end; structured data, where the data adheres to a specific format or schema, such as JavaScript Object Notation (JSON), Extensible Markup Language (XML), or Comma Separated Values (CSV) files, where the arrangement of the data conveys meaning; or unstructured data, where the information does not have a pre-defined data model.

Due to the diverse nature of the message (x), prior to being encrypted, the message (x) may be transformed into a uniform format that the encryption algorithm can efficiently process, ensuring that the intrinsic characteristics of the original data-regardless of its type and/or structure-are preserved and translated into a numerical or binary format. Such a transformation may be governed by specific encoding standards, which dictate how different types of data are represented numerically. For example, the message (x) may be transformed using American Standard Code for Information Interchange (ASCII), Unicode, binary encoding, hexadecimal encoding, and/or the like. By standardizing the representation of various data types, the transformation ensures that encryption algorithms can apply their mathematical transformations uniformly, regardless of the original data's nature. As such, regardless of the initial form of the message (x), the message (x) can be transformed into either an integer format, non-integer format, rational numbers, and/or the like to comply with the operational requirements of the cryptographic algorithm described herein. In an example embodiment, the message (x) may satisfy the condition 0 ≤ *x* ≤ n - 1, where *n* is a composite number of the form, *n = p · q,* and p and q are prime numbers. The choice of *n* as a product of two prime numbers (often large prime numbers) underpins the security of the encryption algorithm. The difficulty of factoring n back into its prime components without prior knowledge of *p* and q makes it computationally difficult for unauthorized parties to decrypt the message (x) without access to the appropriate private key (*f*).

The public encryption key (e) may refer to a portion of the public-private encryption key pair that may be shared openly without compromising the security of the cryptographic system. In an example embodiment, the public encryption key (e) may be generated by an intended recipient (e.g., a decoder, such as the decoder 206 shown in FIG. 2) and communicated to the transmitting party (e.g., the encoder). As such, the public encryption key (e) may be used by anyone to encrypt the data (e.g., message (x)). Alternatively or additionally, the public encryption key (e) may be generated by the encoder and transmitted to the decoder along with the ciphertext *(c)* for digital signature verification purposes. The public encryption key (e) may be a large prime number or have a large prime factor. For example, the public encryption key (e) may satisfy the condition 1 *< e* < *ϕ*(*n*)*,* where *ϕ*(*n*) is Euler's totient function. Here, *ϕ*(*n*) = *ϕ* (*p · q*) = (p - 1) · (*q* - 1). Furthermore, e may be coprime to *ϕ*(*n*)*,* ensuring that e has an inverse modulo *ϕ*(*n*), a necessary condition for the corresponding private key (*f*) to exist, where *f* is the number that satisfies the equation e *· f =* 1 *mod ϕ*(*n*)*.* In other words, *f* is chosen such that the product of *f* and e, when divided by *ϕ*(*n*), leaves a remainder of 1. Alternatively or additionally, the public encryption key (e) may satisfy the condition 1 < e < *λ*(*n*)*,* where *λ*(*n*) is a Carmichael's totient function. Here, *λ*(*n*) = *λ*(*p · q*) = *lcm(p* - 1, *q -* 1), where lcm is least common multiple. Similarly, e may be coprime to *λ*(*n*)*,* ensuring that e has an inverse modulo *λ*(*n*)*,* a necessary condition for the corresponding private key (*f*) to exist, where *f* is the number that satisfies the equation e · *f =* 1 *mod λ*(*n*)*.*

The plurality of encoding variables *(y*₁*, y*₂*, ... , yₙ*) may be a set of parameters used to modify the message *(x)* during the encryption process. Each encoding variable (*yᵢ*) may be used to sequentially transform the message *(x)* into the ciphertext *(c)* through iterative quandle operations ▷. The plurality of encoding variables (*y*₁*, y*₂*,* ... , *yₙ*) may collectively add layers of complexity to the encryption process, thereby improving the security of the resulting ciphertext *(c).* In various embodiments, each encoding variable *yᵢ* may be generated by the decoder. Similar to the public encryption key *(e),* the intended recipient may generate the encoding variables (*y*₁*, y₂, ... , yₙ*)*,* and communicate the encoding variables (*y*₁*, y*₂*, ... , yₙ*) to the transmitter (e.g., encoder) for use in the encryption process. Alternatively, the the encoder may generate the encoding variables and transmit them to the decoder along with the public encryption key *(e)* and the ciphertext *(c)* to facilitate decryption and, optionally, digital signature verification. The encoding variables (*y*₁*, y*₂, ..., *yₙ*) may also be communicated between the encoder and decoder via a secure key distribution protocol, such as quantum key distribution (QKD).

Each encoding variable (*yᵢ*) may be a constant, a randomly generated number, a value derived from some aspect of the encryption scheme, and/or the like, introducing variability and unpredictability. In the encryption algorithm described herein, each encoding variable (*yᵢ*) may be a rational number that is not equal to 1. In various embodiments, the plurality of encoding variables (*y*₁*, y*₂*, ... , yₙ*) may be derived directly from the message *(x)* itself. In these cases, the message *x* may be segmented into *n* separate portions (*x*₁*, x*₂*,* ... , *xₙ*)*,* and each portion may serve as an encoding variable (*yᵢ*). This approach integrates the message into the encryption process, adding an intrinsic layer of complexity and binding the ciphertext (c) more closely to the original message *(x).* In examples where the message *(x)* is a numeric message, the message may be split into individual digits or rational components. In examples where the message (x) is a textual message, the message may be divided into smaller sub-strings, such as characters, words, or groups of characters, and encoded numerically for use in the encryption algorithm. In examples where the message *(x)* is represented as a data stream, the message may be segmented into fixed-size segments or dynamically determined portions based on encryption requirements. The use of multiple encoding variables (*y*₁*, y₂, ... , yₙ*) may significantly increase the security of the encryption process by introducing non-linearity and complexity through iterative quandle operations (as described in more detail below). What is more, the use of multiple encoding variables (*y*₁*, y*₂*,* ... , *yₙ*) may make the ciphertext (c) resistant to unauthorized decryption attempts, as reversing operations require precise knowledge of all *yᵢ*, the private key *(f),* and the sequence of operations.

As shown in block 404, the encoder may generate a ciphertext *(c)* based on the message *(x),* the plurality of encoding variables (*y*₁*, y*₂, ... , *yₙ*)*,* and the public encryption key *(e),* wherein *c =* (... *((x* ▷ *y*₁) ▷ *y*₂) ... ) ▷ *yₙ*. Here, ▷ is a binary operation that satisfies the axioms of quandle and/or rack, and for each encoding variable ${y}_{i} , x ⊳ {y}_{i} = {y}_{i} {\left(\frac{x}{{y}_{i}}\right)}^{e}$. This operation transforms the message *(x)* into ciphertext *(c),* ensuring that the message is encrypted in a manner that can only be decrypted by the intended recipient possessing the corresponding private key *(f).* While the quandle described in various embodiments is a loglinear quandle, other types of quandles may be used for the same or similar purposes, provided they satisfy the axioms of a rack or quandle.

In embodiments where the plurality of encoding variables (*y*₁*, y*₂*,* ... , *yₙ*) comprise a plurality of segmented message portions (*x*₁*, x₂, ... , xₙ*) from the message *(x),* the encoder may generate the ciphertext *(c)* based on the plurality of segmented message portions (*x*₁*, x*₂*,* ... , *xₙ*)*,* and the public encryption key *(e).* In such cases, c *=* (... *((x* ▷ *x*₁) ▷ *x*₂) ... ) ▷ *xₙ*. In embodiments where the plurality of encoding variables (*y*₁*, y*₂*, ... , yₙ*) comprise parameters that may undergo pairwise quandle operations, the encoder may generate intermediate variables, ${y}_{k}^{′}$, based on these operations. These intermediate variables, ${y}_{k}^{′}$, may then be used to generate the ciphertext *(c),* by interacting with the original message *(x)* that has already been transformed through interactions with other encoding variables *yᵢ* and ${y}_{k}^{′}$. The encryption process in such cases may be represented as $c = \left(…\left(\left(x⊳{y}_{k}^{′}\right)⊳{y}_{i + 1}\right)…\right) ⊳ {y}_{n}$, where ${y}_{k}^{′}$ represents the transformed encoding variables derived from pairwise quandle operations. By introducing pairwise interactions between the encoding variables *yᵢ*, the encryption process effectively "crosses" the original message *(x)* (or its intermediate transformations) with a larger set of variables, including *yᵢ*, ${y}_{k}^{′}$, and their combinations. This may exponentially increase the number of transformations or "crossings" applied to the message *(x),* thereby increasing the complexity of the encryption process. Consequently, the decryption process becomes substantially more challenging for unauthorized entities who do not possess the correct sequence of "unknotting" operations required to reverse the transformations and recover the original message *(x).*

As shown in block 406, the encoder may transmit the ciphertext *(c)* on a communication channel (e.g., the communication channel 204 in FIG. 2). Once generated, the ciphertext (c) may be transmitted via the communication channel to an intended recipient. In embodiments where the plurality of encoding variable *(y)* is generated by the encoder (e.g., for digital signature verification purposes), the encoding variables (*y*₁*, y*₂*,* ..., *yₙ*) is transmitted along with the ciphertext *(c)* on the communication channel. As described herein, the communication channel may serve as the medium over which the encrypted data is transmitted from the encoder to the particular recipient (e.g., a decoder). Upon receiving the ciphertext (c), and, in an example embodiment, the variables *(y*₁*, y*₂*, ... , yₙ*)*,* the decoder may be configured to generate a deciphered form *(x')* of the message *(x)* based on the ciphertext (c), the variables (*y*₁*, y*₂*, ..., yₙ*)*,* and a private encryption key *(f),* as described in further detail with respect to FIG. 5.

### Example Method for Decrypting an Encrypted Message Using a Private Encryption Key and the Plurality of Encoding Variables

FIG. 5 illustrates an example method 500 for decrypting an encrypted message using a private encryption key and the plurality of encoding variables, in accordance with an embodiment of the invention. As shown in block 502, a decoder (such as a decoder 206 shown in FIG. 2 and configured as shown and described above in connection with FIG. 3) may receive a ciphertext *(c),* a plurality of encoding variables (*y*₁*, y*₂*,* ... , *yₙ*)*,* and a private encryption key *(f).*

The private encryption key (*f*) may refer to a component of the key pair used for decryption. As described herein, the encryption algorithm may be an asymmetric cryptographic system that employs a pair of keys: a public encryption key *(e)* for encryption and a private encryption key (*f*) for decryption. In an example embodiment, an intended recipient (e.g., decoder) may generate the public-private key pair that is to be used in the encryption-decryption process. To generate the private encryption key *(f),* any intended recipient (e.g., a decoder) may select two distinct (typically) large prime numbers, *p* and *q.* The size of the prime numbers chosen may inform the security of the encryption algorithm. Once *p* and *q* are chosen, the decoder may be configured to determine the modulus *n* by multiplying *p* and *q.* This modulus is used in both the public encryption key (e) and the private encryption key (f). Subsequently, the decoder may be configured to determine an Euler's Totient function, *ϕ*(*n*) = *ϕ*(*p · q*) = *(p -* 1) · *(q* - 1), which represents the count of numbers less than *n* that are coprime to *n.* Then the decoder may choose a public encryption key *(e)* such that 1 < e < *ϕ*(*n*)*,* and *e* is coprime to *ϕ*(*n*)*.* For example, e may be a small prime number, such as 65537, to make encryption efficient. Subsequently, the decoder may be configured to calculate the private encryption key (*f*) as the modulo multiplicative inverse of e modulo *ϕ*(*n*)*,* satisfying the equation, e *· f =* 1 *mod ϕ*(*n*), meaning that *f* is a number that, when multiplied by e, yields 1 modulo *ϕ*(*n*)*.* Upon generating the public-private key pair, the decoder may be configured to communicate the public key *(e)* to the encoder. Similarly, the decoder may also generate the plurality of encoding variables (*y*₁*, y*₂*, ... , yₙ*)*.* In this regard, the decoder may generate each encoding variable (*yᵢ*) as a constant, a randomly generated number, a value derived from some aspect of the encryption scheme, and/or the like, and may transmit the plurality of encoding variables (*y*₁*, y*₂, ... , *yₙ*) to the encoder.

As shown in block 504, the decoder may generate a deciphered form (x') of a message *(x)* based on the ciphertext (c), the plurality of encoding variables (*y*₁*, y*₂*, ... , yₙ*)*,* and the private encryption key (f), wherein *x'* = *(... ((c* ◁ *yₙ*) ◁ *y*_{*n-*1}) ... ) ◁ *y*₁. Here, ◁ is a binary operation that satisfies the axioms of quandle and/or rack, and for each encoding variable ${y}_{i} , c ⊲ {y}_{i} = {y}_{i} ⋅ {\left(\frac{c}{{y}_{i}}\right)}^{f}$ . This operation transforms the ciphertext (c) into a deciphered form (*x'*) of the message (*x*).

As such, the proposed encryption framework may be configured to exhibit a level of complexity that, at the very least, is equivalent to that of the RSA encryption algorithm. The proposed encryption framework's complexity, however, is not limited to a single iteration of RSA-level complexity, but may, at the very least, extend to multiple applications of the RSA scheme. This formulation implies that the encryption framework's complexity can be understood as augmented, involving one or more iterations of RSA-level complexity, where each layer or iteration adds an additional level of RSA complexity. The implication of such a design is that the encryption strength and security could be significantly enhanced by introducing multiple public-private key pairs, as described in further detail in FIGs. 6 and 7). Each additional power of RSA compounds the complexity, theoretically making the framework more resistant to decryption efforts without the appropriate key or decryption algorithm. Moreover, the topological aspects of a complex braid can be utilized, making the decryption process even harder, e.g., by utilizing the computational complexity of the unknotting problem.

### Example Method for Encrypting a Message Using a Plurality of Public Encryption Keys and a Plurality of Encoding Variables

FIG. 6 illustrates an example method 600 for encrypting a message using a plurality of public encryption keys and a plurality of encoding variables, in accordance with an embodiment of the invention. As shown in block 602, an encoder (such as the encoder 102 shown in FIG. 2 and configured as shown and described above in connection with FIG. 3) may receive a message *(x),* a plurality of encoding variables (*y*₁*, y*₂*, ..., yₙ*)*,* and a plurality of public encryption keys (*e*₁*, e*₂, *..., eₙ*)*.*

The public encryption keys (*e*₁*, e*₂, *... , eₙ*) may be portions are portions of the public-private key pairs that can be shared openly without compromising the overall security of the cryptographic framework. Each public encryption key (*eᵢ*) may independently satisfy specific mathematical conditions to ensure the security and reversibility of the encryption process. Each public encryption key (*eᵢ*) may be generated by the intended recipient (e.g., the decoder) and communicated to the transmitting party (e.g., the encoder) for use in the encryption process, as described in detail with respect to FIG. 4. Alternatively, the encoder may generate the public encryption keys (*e*₁*,* e₂, *..., eₙ*) and transmit them to the decoder along with the ciphertext (c) for digital signature verification purposes. Each public encryption key (*eᵢ*) may satisfy the condition 1 < *eᵢ* < *ϕ*(*n*), where *ϕ*(*n*) is Euler's totient function, defined as *ϕ*(*n*) = *ϕ*(*p · q*) = *(p - 1)* · (*q* - 1). Alternatively or additionally, the public encryption key (*eᵢ*) may satisfy the condition 1 *< eᵢ < λ*(*n*)*,* where *λ*(*n*) is a Carmichael's totient function. Here, *λ*(*n*) = *λ*(*p · q*) = *lcm(p* - 1, *q* - 1), where lcm is least common multiple. In both cases, *eᵢ* may be chosen such that it is coprime to *ϕ*(*n*) (or *λ*(*n*))*,* ensuring the existence of an inverse modulo *ϕ*(*n*)*(*or *λ(*n))*.*

As shown in block 604, the encoder may generate a ciphertext (c) based on the message *(x),* the plurality of encoding variables *(y*₁*, y*₂*,* ... , *yₙ*)*,* and the plurality of public encryption keys (*e*₁*, e*₂*, ... , eₙ*)*,* wherein c *= x* ▷ *ⁱ yᵢ*. Here, ▷ is a binary operation that satisfies the axioms of quandle and/or rack, and $x {⊳}^{i} {y}_{i} = {y}_{i} ⋅ {\left(\frac{x ⊳ y i \left(i-1\right)}{{y}_{i}}\right)}^{{e}_{i}}$. This operation transforms the message (x) into ciphertext (c), ensuring that the message is encrypted in a manner that can only be decrypted by the intended recipient possessing the corresponding plurality of private encryption keys (*f*₁*, f₂,* ... , *fₙ*).

As shown in block 606, the encoder may transmit the ciphertext (c) on a communication channel (e.g., the communication channel 204 in FIG. 2). As described herein, once generated, the ciphertext (c) may be transmitted via the communication channel to an intended recipient. Upon receiving the ciphertext (c), and, in an example embodiment, the variables (*y*₁*, y*₂, *... , yₙ*)*,* the decoder may be configured to generate a deciphered form *(x')* of the message *(x)* based on the ciphertext (c), the variables (*y*₁*, y*₂*, ... , yₙ*), and the plurality of private encryption keys (*f*₁*, f₂, ... , fₙ*)*,* as described in further detail with respect to FIG. 7.

### Example Method for Decrypting a Message Using a Plurality of Private Encryption Keys and a Plurality of Encoding Variables

FIG. 7 illustrates an example method 700 for decrypting an encrypted message, in accordance with an embodiment of the invention. As shown in block 702, a decoder (such as a decoder 206 shown in FIG. 2 and configured as shown and described above in connection with FIG. 3) may receive a ciphertext (c), a plurality of encoding variables (*y*₁*, y*₂*, ... , yₙ*)*,* and a plurality of private encryption keys (*f*₁*, f₂,* ... , *fₙ*)*.*

The private encryption keys *(f*₁*, f*₂*, ... , fₙ*) may be generated in conjunction with their corresponding public encryption keys (*e*₁*, e*₂*, ... , eₙ*)*,* as described herein, to maintain compatibility and ensure the security of the encryption framework. In an example embodiment, an intended recipient (e.g., decoder) generates the public-private key pairs *(e*₁*, f*₁*)*, (*e₂, f*₂*),* ... , (*eₙ, fₙ*) to be used in the encryption and decryption process. To generate the plurality of private encryption keys (*f*₁*, f₂,* ... , *fₙ*)*,* the decoder may select two distinct (typically large) prime numbers p and *q,* which may be used to calculate the modulus *n* by multiplying *p* and *q.* Subsequently, the decoder may be configured to determine Euler's Totient function, *ϕ*(*n*) = *ϕ*(*p · q*) = *(p -* 1) · *(q* - 1), which represents the count of numbers less than *n* that are coprime to *n.* For each step, *i,* the decoder may calculate *eᵢ* such that 1 < *eᵢ* < *ϕ*(*n*) and *eᵢ* is coprime to *ϕ*(*n*)*.* The *eᵢ* values may vary for each step, introducing additional layers of complexity. For each *eᵢ*, the decoder may calculate the corresponding private key, *fᵢ*, as the modular multiplicative inverse of *eᵢ* modulo *ϕ*(*n*)*,* satisfying the equation, *eᵢ* · *fᵢ =* 1 *mod ϕ*(*n*)*.*

As shown in block 704, the decoder may generate a deciphered form (x') of a message *(x)* based on the ciphertext (c), the plurality of encoding variables (*y*₁*, y*₂*, ... , yₙ*)*,* and the plurality of private encryption keys (*f*₁*, f₂,* ... , *fₙ*)*,* wherein *x'* = *c* ◁ *ⁱ yᵢ*. Here, ◁ is a binary operation that satisfies the axioms of quandle and/or rack, and $c {⊲}^{i} {y}_{i} = {y}_{i} ⋅ {\left(\frac{c ⊲ y i \left(i-1\right)}{{y}_{i}}\right)}^{{f}_{i}}$, wherein *fᵢ* corresponds to the private key for the *i^{th}* step. This operation transforms the ciphertext (c) into a deciphered form (*x'*) of the message (x).

It is to be understood that the principles described in FIGs. 4-7 can be similarly applied to encryption using a single encoding variable (y) in conjunction with a plurality of public-private key pairs (*e*₁*, f*₁*),* (*e₂, f₂*)*, ... ,* (*eₙ, fₙ*)*.* Alternatively or additionally, different encoding variables may be used for different parts of the same plaintext, provided they conform to the encryption framework, and certain parts of the plaintext may be used to generate the encoding variables themselves.

As such, the proposed cryptographic framework leverages quandle-based operations to provide a generalized and flexible model that extends classical cryptographic schemes, such as RSA, while maintaining comparable encoding complexity. The proposed framework supports various forms of homomorphic encryption, including "partial," "somewhat homomorphic," and "leveled full" encryption, allowing certain computations to be performed directly on ciphertext without revealing the underlying plaintext. By enabling homomorphic operations involving multiplication and generalized quandle distributivity, the framework facilitates secure and reversible transformations of encrypted data. The additional decoding complexity introduced by the quandle algebraic structure, combined with the inherent topological hardness of the operations, improves cryptographic strength. These properties make the proposed framework highly resistant to unauthorized access and well-suited for modern applications that demand secure and privacy-preserving computations, such as secure data analytics and collaborative environments.

Many modifications and other embodiments of the present disclosure set forth herein will come to mind to one skilled in the art to which these embodiments pertain having the benefit of the teachings presented in the foregoing descriptions and the associated drawings. Although the figures only show certain components of the methods and systems described herein, it is understood that various other components may also be part of the disclosures herein. In addition, the method described above may include fewer steps in some cases, while in other cases the method may include additional steps. The steps and modifications to the steps of the method described above, in some cases, may be performed in any order and in any combination.

Therefore, it is to be understood that the present disclosure is not to be limited to the specific embodiments disclosed and that modifications and other embodiments are intended to be included within the scope of the appended claims. Although specific terms are employed herein, they are used in a generic and descriptive sense only and not for purposes of limitation.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

The disclosure of this application also includes the following numbered clauses:
Clause 1. A system for implementing secure communication, the system comprising:
   an encoder, wherein the encoder is configured to:
      receive a message *(x),* a plurality of encoding variables (*y*₁*, y*₂*, ... , yₙ*)*,* and a public encryption key (e);
      generate a ciphertext (c) based on the message (x), the plurality of encoding variables *(y*₁*, y*₂*,* ..., *yₙ*)*,* and the public encryption key (e), wherein c = (... *((x* ▷ *y*₁) ▷ *y*₂) ... ) ▷ *yₙ*; and
      transmit the ciphertext (c) on a communication channel, wherein the communication channel is operatively coupled to the encoder; and
   a decoder operatively coupled to the communication channel, wherein the decoder is configured to:
      receive the ciphertext (c), the plurality of encoding variables (*y*₁*, y*₂*,* ..., *yₙ*)*,* and a private encryption key (f); and
      generate a deciphered form *(x')* of the message *(x)* based on the ciphertext (c), the plurality of encoding variables (*y*₁*, y*₂*,* ..., *yₙ*)*,* and the private encryption key (f), wherein *x'* = (... *((c* ◁ *yₙ*) ◁ *yₙ₋₁*) ...) ◁ *y*₁ , and wherein ▷ and ◁ are binary operations that satisfy axioms of a quandle.
Clause 2. The system of Clause 1, wherein x and *yᵢ* are rational numbers, and wherein *yᵢ* is not equal to 1.
Clause 3. The system of Clause 1, wherein x is a non-integer.
Clause 4. The system of Clause 1, wherein 0 ≤ *x* ≤ *n* - 1, wherein n is a composite number of the form, n = p · q, and wherein *p* and *q* are prime numbers.
Clause 5. The system of Clause 4, wherein for each encoding variable ${y}_{i} , x ⊳ {y}_{i} = {y}_{i} {\left(\frac{x}{{y}_{i}}\right)}^{e}$, wherein 1 < e < *ϕ*(*n*)*,* wherein *ϕ*(*n*) is Euler's totient function, and wherein *ϕ*(*n*) = *ϕ*(*p · q*) *= (p -* 1) *·* (*q -* 1)*.*
Clause 6. The system of Clause 5, wherein 1 *< e* < *λ*(*n*)*,* wherein *λ*(*n*) is Carmichael's totient function, and wherein *λ*(*n*) = *λ*(*p · q*) = *lcm(p* - 1, *q* - 1), wherein lcm is least common multiple.
Clause 7. The system of Clause 5, wherein e is coprime to *ϕ*(*n*)*.*
Clause 8. The system of Clause 5, wherein for each encoding variable ${y}_{i} , c ⊲ {y}_{i} = {y}_{i} {\left(\frac{c}{{y}_{i}}\right)}^{f}$ , and wherein e · *f =* 1 *mod ϕ*(*n*)*.*
Clause 9. The system of Clause 1, wherein the plurality of encoding variables (*y*₁*, y*₂*, ... , yₙ*) comprise a plurality of segmented message portions (*x*₁*, x*₂*,* ... , *xₙ*) from the message *(x),* wherein the encoder is further configured to:
   generate a ciphertext (c) based on the plurality of segmented message portions (*x*₁*, x*₂*,* ... , *xₙ*)*,* and the public encryption key (e), wherein c *=* (... *((x* ▷ *x*₁) ▷ *x*₂) ...) ▷ *xₙ.*
Clause 10. The system of Clause 9, wherein the decoder is further configured to:
   generate a deciphered form *(x')* of the message *(x)* based on the ciphertext (c), the plurality of segmented message portions (*x*₁*, x*₂*,* ... , *xₙ*)*,* and the private encryption key (f), wherein *x'* = *(... ((c* ◁ *xₙ*) ◁ *x*_{*n-*1}) ... ) ◁ *x*₁.
Clause 11. A system for encoding a message, the system comprising:
   an encoder; and
   a communication channel operatively coupled to the encoder,
   wherein the encoder is configured to:
      receive a message *(x),* a plurality of encoding variables (*y*₁*, y*₂*, ..., yₙ*)*,* and a public encryption key (e);
      generate a ciphertext (c) based on the message (x), the plurality of encoding variables (*y*₁*, y*₂*,* ..., *yₙ*)*,* and the public encryption key (e), wherein c = (... ((*x* ▷ *y*₁) ▷ *y*₂) ... ) ▷ *yₙ*, wherein ▷ is a binary operation that satisfies an axiom of a quandle; and
      transmit the ciphertext (c) on the communication channel.
Clause 12. The system of Clause 11, wherein 0 ≤ *x* ≤ *n* - 1, wherein *n* is a composite number of the form, n = p · q, and wherein *p* and *q* are prime numbers.
Clause 13. The system of Clause 12, wherein for each encoding variable ${y}_{i} , x ⊳ {y}_{i} = {y}_{i} {\left(\frac{x}{{y}_{i}}\right)}^{e}$ , wherein 1 *< e* < *ϕ*(*n*)*,* wherein *ϕ*(*n*) is Euler's totient function, and wherein *ϕ*(*n*) = *ϕ*(*p* · *q*) = *(p* - 1) · *(q* - 1).
Clause 14. A method for encoding a message, the method comprising:
   receiving a message *(x),* a plurality of encoding variables (*y*₁*, y*₂*, ..., yₙ*)*,* and a public encryption key (e);
   generating a ciphertext (c) based on the message (x), the plurality of encoding variables (*y*₁*, y*₂*, ... , yₙ*)*,* and the public encryption key (e), wherein c = (... *((x* ▷ *y*₁) ▷ *y*₂) ... ) ▷ *yₙ*, wherein ▷ is a binary operation that satisfies an axiom of a quandle; and
   transmitting, using the encoder, the ciphertext (c) to a communication channel.
Clause 15. The method of Clause 14, wherein 0 ≤ *x* ≤ n - 1, wherein n is a composite number of the form, n = *p* · *q*, and wherein *p* and *q* are prime numbers.
Clause 16. The method of Clause 15, wherein for each encoding variable ${y}_{i} , x ⊳ {y}_{i} = {y}_{i} {\left(\frac{x}{{y}_{i}}\right)}^{e}$ , wherein 1 *< e* < *ϕ*(*n*)*,* wherein *ϕ*(*n*) is Euler's totient function, and wherein *ϕ*(*n*) = *ϕ*(*p* · *q)* = *(p* - 1) · *(q* - 1).
Clause 17. A system for decoding a message, the system comprising:
   a decoder; and
   a communication channel operatively coupled to the decoder,
   wherein the decoder is configured to:
      receive, via the communication channel, a ciphertext (c), a plurality of encoding variables *(y*₁*, y*₂*, ... , yₙ*)*,* and a private encryption key (f); and
      generate a deciphered form *(x')* of a message *(x)* based on the ciphertext (c), the plurality of encoding variables (*y*₁*, y*₂*,* ... , *yₙ*)*,* and the private encryption key (f), wherein *x'* = *(... ((c* ◁ *yₙ*) ◁ *y*_{*n-*1}) ... ) ◁ *y*₁ , and wherein ◁ is a binary operation that satisfies an axiom of a quandle.
Clause 18. The system of Clause 17, wherein c = (... *((x* ▷ *y*₁) ▷ *y*₂) ... ) ▷ *yₙ*, wherein for each encoding variable ${y}_{i} , c ⊲ {y}_{i} = {y}_{i} ⋅ {\left(\frac{c}{{y}_{i}}\right)}^{f}$, and wherein *e* · *f =* 1 *mod ϕ*(*n*)*.*
Clause 19. A method for decoding a message, the method comprising:
   receiving, using a decoder, a ciphertext (c), a plurality of encoding variables (*y*₁*, y*₂*, ... , yₙ*)*,* and a private encryption key (*f*); and
   generating, via the decoder, a deciphered form *(x')* of the message *(x)* based on the ciphertext (c), the plurality of encoding variables *(y*₁*, y*₂*, ... , yₙ*)*,* and the private encryption key *(f),* wherein *x'* = *(... ((c* ◁ *yₙ*) ◁ *y*_{*n-*1}) ... ) ◁ *y*₁*,* and wherein ◁ is a binary operation that satisfies an axiom of a quandle.
Clause 20. The method of Clause 14, wherein c = ( *...* ((x ▷ *y*₁) ▷ *y*₂) ... ) ▷ *yₙ*, wherein for each encoding variable ${y}_{i} , c ⊲ {y}_{i} = {y}_{i} ⋅ {\left(\frac{c}{{y}_{i}}\right)}^{f}$, and wherein *e* · *f =* 1 *mod ϕ*(*n*)*.*
Clause 21. A system for implementing secure communication, the system comprising:
   an encoder, wherein the encoder is configured to:
      receive a message (*x*), a plurality of encoding variables (*y*₁, *y*₂, *...* , *yₙ*), and a plurality of public encryption keys (*e*₁, *e*₂*, ... , eₙ*);
      generate a ciphertext (c) based on the message (x), the plurality of encoding variables (*y*₁, *y*₂, *... , yₙ*), and the plurality of public encryption keys (*e*₁*, e*₂, ... , *eₙ*), wherein at each step, c *= x* **▷** *ⁱ yᵢ* ; and
      transmit the ciphertext (c) on a communication channel, wherein the communication channel operatively coupled to the encoder; and
   a decoder operatively coupled to the communication channel, wherein the decoder is configured to:
      receive the ciphertext (c), the plurality of encoding variables (*y*₁, *y*₂, ... , *yₙ*), and a plurality of private encryption keys (*f*₁, *f*₂, ... , *fₙ*); and
      generate a deciphered form *(x')* of the message *(x)* based on the ciphertext (c), the plurality of encoding variables (*y*₁, *y*₂, ... , *yₙ*), and the plurality of private encryption keys (*f*₁, *f*₂, ... , *fₙ*), wherein at each step, *x'* = *c* ◁ *ⁱ yᵢ*, and wherein ▷ and ◁ are binary operations that satisfy an axiom of a quandle.
Clause 22. The system of Clause 21, wherein 0 ≤ *x* ≤ *n* - 1, wherein *n* is a composite number of the form, *n* = *p* · *q*, and wherein *p* and *q* are prime numbers.
Clause 23. The system of Clause 22, wherein $x {⊳}^{i} {y}_{i} = {y}_{i} ⋅ {\left(\frac{x ⊳ y i \left(i-1\right)}{{y}_{i}}\right)}^{{e}_{i}}$, wherein 1 < *eᵢ < ϕ*(*n*), wherein *ϕ*(*n*) is Euler's totient function, and wherein *ϕ*(*n*) = *ϕ*(*p · q*) *=* (*p -* 1) · (*q* - 1).
Clause 24. The system of Clause 23, wherein $c {⊲}^{i} {y}_{i} = {y}_{i} ⋅ {\left(\frac{c ⊲ y i \left(i-1\right)}{{y}_{i}}\right)}^{{f}_{i}}$, wherein *fᵢ* corresponds to the private key for the *i^{th}* step, and wherein *eᵢ* · *fᵢ =* 1 *mod ϕ*(*n*)*.*
Clause 25. A system for encoding a message, the system comprising:
   an encoder; and
   a communication channel operatively coupled to the encoder,
   wherein the encoder is configured to:
      receive a message *(x),* a plurality of encoding variables (*y*₁, *y*₂, *..., yₙ*), and a plurality of public encryption keys (*e*₁, *e*₂, *... , eₙ*);
      generate a ciphertext (*c*) based on the message (*x*), the plurality of encoding variables (*y*₁, *y*₂*,* ..., *yₙ*), and the plurality of public encryption keys (*e*₁, *e*₂, ..., *eₙ*), wherein at each step, *c* = *x* ▷ *ⁱ yᵢ* , and wherein ▷ is a binary operation that satisfies an axiom of a quandle; and
      transmit the ciphertext (*c*) on the communication channel.
Clause 26. The system of Clause 25, wherein 0 ≤ *x* ≤ *n* - 1, wherein *n* is a composite number of the form, *n* = *p* · *q*, and wherein *p* and *q* are prime numbers.
Clause 27. The method of Clause 26, wherein $x {⊳}^{i} {y}_{i} = {y}_{i} ⋅ {\left(\frac{x ⊳ y i \left(i-1\right)}{{y}_{i}}\right)}^{{e}_{i}}$, wherein 1 < *eᵢ < ϕ*(*n*), wherein *ϕ*(*n*) is Euler's totient function, and wherein *ϕ*(*n*) = *ϕ*(*p · q*) *=* (*p -* 1) · (*q* - 1).
Clause 28. A method for encoding a message, the method comprising:
   receiving a message *(x),* a plurality of encoding variables (*y*₁, *y*₂, ... , *yₙ*), and a plurality of public encryption keys (*e*₁, *e*₂, *... , eₙ*);
   generating a ciphertext (*c*) based on the message (*x*), the plurality of encoding variables (*y*₁*, y*₂, ... , *yₙ*), and the plurality of public encryption keys (*e*₁, *e*₂, ..., *eₙ*), wherein *c = x* ▷ *ⁱ yᵢ* at each step, and wherein ▷ is a binary operation that satisfies an axiom of a quandle; and
   transmitting, using the encoder, the ciphertext (*c*) to a communication channel.
Clause 29. The method of Clause 28, wherein 0 ≤ *x* ≤ n - 1, wherein n is a composite number of the form, *n* = *p* · *q*, and wherein *p* and *q* are prime numbers.
Clause 30. The method of Clause 29, wherein $x {⊳}^{i} {y}_{i} = {y}_{i} ⋅ {\left(\frac{x ⊳ y i \left(i-1\right)}{{y}_{i}}\right)}^{{e}_{i}}$, wherein 1 < *eᵢ < ϕ*(*n*), wherein *ϕ*(*n*) is Euler's totient function, and wherein *ϕ*(*n*) = *ϕ*(*p · q*) *=* (*p -* 1) · (*q* - 1).
Clause 31. A system for decoding a message, the system comprising:
   a decoder; and
   a communication channel operatively coupled to the decoder,
   wherein the decoder is configured to:
      receive a ciphertext (*c*), a plurality of encoding variables (*y*₁, *y*₂, *..., yₙ*), and a plurality of private encryption keys (*f*₁, *f*₂, ... , *fₙ*); and
      generate a deciphered form *(x')* of a message *(x)* based on the ciphertext (*c*), the plurality of encoding variables (*y*₁, *y*₂, ... , *yₙ*), and the plurality of private encryption keys (*f*₁, *f*₂, ... , *fₙ*), wherein at each step, *x'* = *c* ◁ *ⁱ yᵢ*, and wherein ◁ is a binary operation that satisfies an axiom of a quandle.
Clause 32. The system of Clause 31, wherein $c {⊲}^{i} {y}_{i} = {y}_{i} ⋅ {\left(\frac{c ⊲ y i \left(i-1\right)}{{y}_{i}}\right)}^{{f}_{i}}$, wherein *fᵢ* corresponds to the private key for the *i^{th}* step, and wherein *eᵢ* · *fᵢ =* 1 *mod ϕ*(*n*)*.*
Clause 33. A method for decoding a message, the method comprising:
   receiving, using a decoder, a ciphertext (*c*), a plurality of encoding variables (*y*₁, *y*₂, *... , yₙ*), and a plurality of private encryption keys (*f*₁, *f*₂, ... , *fₙ*); and
   generating, via the decoder, a deciphered form *(x')* of the message *(x)* based on the ciphertext (c), the plurality of encoding variables (*y*₁, *y*₂, *...* , *yₙ*), and the plurality of private encryption keys (*f*₁, *f*₂, ... , *fₙ*), wherein *x' = c* ◁ *ⁱ yᵢ* at each step, and wherein ◁ is a binary operation that satisfies an axiom of a quandle.
Clause 34. The method of Clause 33, wherein $c {⊲}^{i} {y}_{i} = {y}_{i} ⋅ {\left(\frac{c ⊲ y i \left(i-1\right)}{{y}_{i}}\right)}^{{f}_{i}}$, wherein *fᵢ* corresponds to the private key for the *i^{th}* step, and wherein *eᵢ* · *fᵢ* = 1 *mod ϕ*(*n*)*.*

## Claims

1. A system for implementing secure communication, the system comprising:
an encoder, wherein the encoder is configured to:
receive a message (*x*), a plurality of encoding variables (*y*₁, *y*₂, *..., yₙ*), and a public encryption key (*e*);
generate a ciphertext (*c*) based on the message (*x*), the plurality of encoding variables (*y*₁, *y*₂, ..., *yₙ*), and the public encryption key (*e*), wherein *c* = (... ((*x* ▷ *y*₁) ▷ *y*₂) ...) ▷ *yₙ*; and
transmit the ciphertext (*c*) on a communication channel, wherein the communication channel is operatively coupled to the encoder; and
a decoder operatively coupled to the communication channel, wherein the decoder is configured to:
receive the ciphertext (c), the plurality of encoding variables (*y*₁, *y*₂, ..., *yₙ*), and a private encryption key (f); and
generate a deciphered form *(x')* of the message *(x)* based on the ciphertext (c), the plurality of encoding variables (*y*₁, *y*₂, ..., *yₙ*), and the private encryption key (f), wherein *x'* = (... ((*c* ◁ *yₙ*) ◁ *y*_{*n-*1})...) ◁ *y*₁ , and wherein ▷ and ◁ are binary operations that satisfy axioms of a quandle.

2. The system of Claim 1, wherein *x* and *yᵢ* are rational numbers, and wherein *yᵢ* is not equal to 1, wherein *x* is a non-integer.

3. The system of Claim 1, wherein 0 ≤ *x* ≤ *n* - 1, wherein n is a composite number of the form, *n* = *p* · *q*, and wherein *p* and *q* are prime numbers, wherein for each encoding variable ${y}_{i} , x ⊳ {y}_{i} = {y}_{i} {\left(\frac{x}{{y}_{i}}\right)}^{e}$, wherein 1 < *e* < *ϕ*(*n*), wherein *ϕ*(*n*) is Euler's totient function, and wherein *ϕ*(*n*) = *ϕ*(*p · q*) *=* (*p* - 1) *·* (*q* - 1), preferably wherein 1 *< e < λ*(*n*), wherein *λ*(*n*) is Carmichael's totient function, and wherein *λ*(*n*) = *λ*(*p · q*) = *lcm*(*p* - 1, *q -* 1), wherein lcm is least common multiple.

4. The system of Claim 3, wherein e is coprime to *ϕ*(*n*)*.*

5. The system of Claim 3 or 4, wherein for each encoding variable ${y}_{i} , c ⊲ {y}_{i} = {y}_{i} . {\left(\frac{c}{{y}_{i}}\right)}^{f}$, and wherein *e* · *f =* 1 *mod ϕ*(*n*)*.*

6. The system of any preceding Claim, wherein the plurality of encoding variables (*y*₁, *y*₂, ... , *yₙ*) comprise a plurality of segmented message portions (*x*₁, *x*₂, ..., *xₙ*) from the message (x), wherein the encoder is further configured to:
generate a ciphertext (c) based on the plurality of segmented message portions (*x*₁, *x*₂, *... , xₙ*), and the public encryption key (e), wherein *c* = (... ((*x* ▷ *x*₁) ▷ *x*₂) ...) ▷ *xₙ,* wherein the decoder is further configured to:
generate a deciphered form (*x'*) of the message (*x*) based on the ciphertext (c), the plurality of segmented message portions (*x*₁, *x*₂, ... , *xₙ*), and the private encryption key (f), wherein *x' =* (*...* ((*c* ◁ *xₙ*) ◁ *x*_{*n-*1}) ...) ◁ *x*₁.

7. A system for encoding a message, the system comprising:
an encoder; and
a communication channel operatively coupled to the encoder,
wherein the encoder is configured to:
receive a message (*x*)*,* a plurality of encoding variables (*y*₁, *y*₂, *...* , *yₙ*), and a public encryption key (*e*);
generate a ciphertext (*c*) based on the message (*x*), the plurality of encoding variables (*y*₁, *y*₂, ... , *yₙ*), and the public encryption key (e), wherein c = (... ((*x* ▷ *y*₁) ▷ *y*₂) ...) ▷ *yₙ*, wherein ▷ is a binary operation that satisfies an axiom of a quandle; and
transmit the ciphertext (*c*) on the communication channel.

8. A method for encoding a message, the method comprising:
receiving a message (*x*), a plurality of encoding variables (*y*₁, *y*₂, ... , *yₙ*), and a public encryption key (*e*);
generating a ciphertext (*c*) based on the message (*x*), the plurality of encoding variables (*y*₁, *y*₂, *... , yₙ*), and the public encryption key (*e*), wherein *c* = (... ((*x* ▷ *y*₁) ▷ *y*₂) ...) ▷ *yₙ*, wherein ▷ is a binary operation that satisfies an axiom of a quandle; and
transmitting, using the encoder, the ciphertext (*c*) to a communication channel.

9. A system for decoding a message, the system comprising:
a decoder; and
a communication channel operatively coupled to the decoder,
wherein the decoder is configured to:
receive, via the communication channel, a ciphertext (*c*), a plurality of encoding variables (*y*₁, *y*₂, *...* , *yₙ*), and a private encryption key (*f*); and
generate a deciphered form (*x'*) of a message (*x*) based on the ciphertext (*c*), the plurality of encoding variables (*y*₁, *y*₂, ... , *yₙ*), and the private encryption key (*f*), wherein *x'* = (... ((*c* ◁ *yₙ*) ◁ *y*_{*n-*1}) ...) ◁ *y*₁ , and wherein ◁ is a binary operation that satisfies an axiom of a quandle.

10. A method for decoding a message, the method comprising:
receiving, using a decoder, a ciphertext (*c*), a plurality of encoding variables (*y*₁, *y*₂, ... , *yₙ*), and a private encryption key (*f*); and
generating, via the decoder, a deciphered form (*x*') of the message (*x*) based on the ciphertext (c), the plurality of encoding variables (*y*₁, *y*₂, *...* , *yₙ*), and the private encryption key (*f*), wherein *x'* = (*...* ((*c* ◁ *yₙ*) ◁ *y*_{*n-*1}) ...) ◁ *y*₁, and wherein ◁ is a binary operation that satisfies an axiom of a quandle.

11. A system for implementing secure communication, the system comprising:
an encoder, wherein the encoder is configured to:
receive a message *(x),* a plurality of encoding variables (*y*₁, *y*₂, *...* , *yₙ*), and a plurality of public encryption keys (*e*₁, *e*₂, ... *, eₙ*);
generate a ciphertext (*c*) based on the message (*x*), the plurality of encoding variables (*y*₁, *y*₂, ... , *yₙ*), and the plurality of public encryption keys (*e*₁, *e*₂, ... , *eₙ*), wherein at each step, *c = x* ▷ *ⁱ yᵢ* ; and
transmit the ciphertext (*c*) on a communication channel, wherein the communication channel operatively coupled to the encoder; and
a decoder operatively coupled to the communication channel, wherein the decoder is configured to:
receive the ciphertext (*c*), the plurality of encoding variables (*y*₁, *y*₂, ... , *yₙ*), and a plurality of private encryption keys (*f*₁, *f*₂, ... , *fₙ*); and
generate a deciphered form (*x*') of the message (*x*) based on the ciphertext (*c*), the plurality of encoding variables (*y*₁, *y*₂, ... , *yₙ*), and the plurality of private encryption keys (*f*₁, *f*₂, ... , *fₙ*), wherein at each step, *x'* = *c* ◁ *ⁱ yᵢ*, and wherein ▷ and ◁ are binary operations that satisfy an axiom of a quandle, preferably: wherein $x {⊳}^{i} {y}_{i} = {y}_{i} . {\left(\frac{x ⊳ y i \left(i-1\right)}{{y}_{i}}\right)}^{{e}_{i}}$, wherein 1 < *eᵢ < ϕ*(*n*), wherein *ϕ*(*n*) is Euler's totient function, wherein *ϕ*(*n*) = *ϕ*(*p · q*) *=* (*p -* 1) *·* (*q -* 1), wherein $c {⊲}^{i} {y}_{i} = {y}_{i} . {\left(\frac{c ⊲ y i \left(i-1\right)}{{y}_{i}}\right)}^{{f}_{i}}$, wherein *fᵢ* corresponds to the private key for the *i^{th}* step, and wherein *eᵢ* · *fᵢ =* 1 *mod ϕ*(*n*)*.*

12. A system for encoding a message, the system comprising:
an encoder; and
a communication channel operatively coupled to the encoder,
wherein the encoder is configured to:
receive a message (*x*), a plurality of encoding variables (*y*₁, *y*₂, ... , *yₙ*), and a plurality of public encryption keys (*e*₁, *e*₂, *... , eₙ*);
generate a ciphertext (*c*) based on the message (*x*), the plurality of encoding variables (*y*₁, *y*₂, ..., *yₙ*), and the plurality of public encryption keys (*e*₁, *e*₂, ... , *eₙ*), wherein at each step, *c = x* ▷ *ⁱ yᵢ* , and wherein ▷ is a binary operation that satisfies an axiom of a quandle; and
transmit the ciphertext (*c*) on the communication channel.

13. A method for encoding a message, the method comprising:
receiving a message (*x*), a plurality of encoding variables (*y*₁, *y*₂, ... , *yₙ*), and a plurality of public encryption keys (*e*₁, *e*₂, ... , *eₙ*);
generating a ciphertext (*c*) based on the message (*x*), the plurality of encoding variables (*y*₁, *y*₂, ... , *yₙ*), and the plurality of public encryption keys (*e*₁, *e*₂, ... *, eₙ*), wherein *c = x* ▷ *ⁱ yᵢ* at each step, and wherein ▷ is a binary operation that satisfies an axiom of a quandle; and
transmitting, using the encoder, the ciphertext (*c*) to a communication channel.

14. A system for decoding a message, the system comprising:
a decoder; and
a communication channel operatively coupled to the decoder,
wherein the decoder is configured to:
receive a ciphertext (*c*), a plurality of encoding variables (*y*₁, *y*₂, ... , *yₙ*), and a plurality of private encryption keys (*f*₁, *f*₂, ... , *fₙ*); and
generate a deciphered form (*x*') of a message (*x*) based on the ciphertext (*c*), the plurality of encoding variables (*y*₁, *y*₂, ... , *yₙ*), and the plurality of private encryption keys (*f*₁, *f*₂, *... , fₙ*), wherein at each step, *x'* = *c* ◁ *ⁱ yᵢ*, and wherein ◁ is a binary operation that satisfies an axiom of a quandle.

15. A method for decoding a message, the method comprising:
receiving, using a decoder, a ciphertext (*c*), a plurality of encoding variables (*y*₁, *y*₂, ... , *yₙ*), and a plurality of private encryption keys (*f*₁, *f*₂, ... , *fₙ*); and
generating, via the decoder, a deciphered form (*x*') of the message (*x*) based on the ciphertext (*c*), the plurality of encoding variables (*y*₁, *y*₂, ... , *yₙ*), and the plurality of private encryption keys (*f*₁, *f*₂, *... , fₙ*), wherein *x' = c* ◁ *ⁱ yᵢ* at each step, and wherein ◁ is a binary operation that satisfies an axiom of a quandle.
